# EUROPEAN PATENT APPLICATION

(11) **EP 4 580 107 A1**
(43) Date of publication of application: **02.07.2025**
(21) Application number: 23867261.2
(22) Date of filing: 01.09.2023
(51) Int. Cl.: H04L 5/00

(54) **COMMUNICATION METHOD AND APPARATUS**

(30) Priority: 22.09.2022 CN 202211169675; 24.10.2022 CN 202211303879
(71) Applicant: Huawei Technologies Co., Ltd., Shenzhen, Guangdong 518129 (CN)
(72) Inventor: ZHANG, Yanqing, Shenzhen, Guangdong 518129 (CN); LI, Xueru, Shenzhen, Guangdong 518129 (CN)
(74) Representative: Goddar, Heinz J.
(86) International application number: PCT/CN2023/116551
(87) International publication number: WO 2024/060970

(57) **Abstract**

This application provides a communication method and apparatus, and relates to the field of wireless communication technologies. In this application, physical shared channel capacity can be increased, and a time-frequency resource waste can be reduced. The method includes: A first device sends control information to a second device. The control information includes a first field, the first field includes G bits, the G bits indicate L rate match pattern groups, the G bits include a plurality of bit groups, and each of the plurality of bit groups indicates rate match pattern groups for a maximum of M physical shared channels. An i^{th} rate match pattern group in the L rate match pattern groups indicates an i^{th} second resource, and the i^{th} second resource is a time-frequency resource that is indicated by the control information and that cannot be occupied by an i^{th} physical shared channel. The first field may be a rate matching indicator field.

## Description

This application claims priorities to Chinese Patent Application No. 202211169675.X, filed with the China National Intellectual Property Administration on September 22, 2022 and entitled "MULTI-PDSCH INDICATION METHOD, TERMINAL DEVICE, NETWORK DEVICE, AND APPARATUS", and to Chinese Patent Application No. 202211303879.8, filed with the China National Intellectual Property Administration on October 24, 2022 and entitled "COMMUNICATION METHOD AND APPARATUS", both of which are incorporated herein by reference in their entireties.

### TECHNICAL FIELD

This application relates to the field of wireless communication, and in particular, to a communication method and apparatus.

### BACKGROUND

In a communication system, one piece of control information can be used to schedule at least two physical shared channels, to increase physical shared channel capacity. In addition, for all physical shared channels scheduled by using the control information, rate match pattern groups (rate match pattern group) are indicated by a same rate matching indicator (rate matching indicator) field. The rate match pattern group covers an area in which time-frequency resources may overlap (overlap) in a time unit in which each physical shared channel scheduled by using the control information is located, to ensure that the physical shared channel does not conflict with a physical control channel. That the time-frequency resources overlap means that a time-frequency resource of the physical shared channel overlaps a time-frequency resource of a physical control channel of another terminal device.

However, in the at least two physical shared channels scheduled by using the same piece of control information, even if there is no physical control channel of another terminal device in a time unit in which a physical shared channel is located, the physical shared channel avoids occupying a time-frequency resource corresponding to the rate match pattern group, leading to a time-frequency resource waste and low physical shared channel capacity.

### SUMMARY

This application provides a communication method and apparatus, to flexibly indicate rate match pattern groups for different physical shared channels scheduled by the communication apparatus, thereby increasing physical shared channel capacity and reducing a time-frequency resource waste. To achieve the foregoing objective, this application uses the following technical solutions.

According to a first aspect, a communication method is provided. The method may be executed by a first device or a chip applied to the first device. The following provides descriptions by using an example in which the method is executed by the first device. The method includes: The first device sends control information and L physical shared channels to a second device. The control information indicates L physical shared channels and L first resources. An i^{th} first resource in the L first resources is a time-frequency resource allocated to an i^{th} physical shared channel in the L physical shared channels. The control information includes a first field, the first field includes G bits, the G bits indicate L rate match pattern groups, the G bits include a plurality of bit groups, each of the plurality of bit groups indicates rate match pattern groups for a maximum of M physical shared channels, the M physical shared channels are a part of the L physical shared channels, and the rate match pattern groups indicated by each of the plurality of bit groups are a part of the L rate match pattern groups. M is a positive integer less than L, and G is a positive integer greater than or equal to 2. An i^{th} rate match pattern group in the L rate match pattern groups indicates an i^{th} second resource, and the i^{th} second resource is a time-frequency resource that is indicated by the control information and that cannot be occupied by the i^{th} physical shared channel. The i^{th} physical shared channel in the L physical shared channels occupies an i^{th} third resource. When the i^{th} second resource exists and the i^{th} second resource overlaps the i^{th} first resource, the i^{th} third resource is a resource other than an overlapping resource in the i^{th} first resource, and the overlapping resource is an overlapping resource between the i^{th} second resource and the i^{th} first resource. Alternatively, when the i^{th} second resource does not exist, the i^{th} third resource is the i^{th} first resource. L is a positive integer greater than 1, and i is any positive integer less than or equal to L.

It is easily understood that when the i^{th} second resource exists and the i^{th} second resource does not overlap the i^{th} first resource, the i^{th} third resource is the i^{th} first resource.

In other words, rate match pattern groups indicated by different bits in the first field are applicable to different physical shared channels, thereby improving flexibility of indicating the rate match pattern group by using the control information. In this way, when resources occupied by another terminal device in a time unit in which two physical shared channels are located are different, the control information may indicate different rate match pattern groups for the two physical shared channels, so that the two physical shared channels avoid the different resources. This increases physical shared channel capacity and reduces a time-frequency resource waste.

In a possible design, before that the first device sends control information to a second device, the method further includes: The first device sends first configuration information to the second device. The first configuration information is used to configure P rate match pattern groups, any one of the L rate match pattern groups is at most one of the P rate match pattern groups, and P is a positive integer greater than 1.

For example, when the i^{th} rate match pattern group in the L rate match pattern groups is not null, the rate match pattern group is one of the P rate match pattern groups. On the contrary, when the i^{th} rate match pattern group in the L rate match pattern groups is null, the rate match pattern group does not exist.

In this way, the first device may configure the P rate match pattern groups for the second device by using the first configuration information.

In a possible design, a first bit group is one of the plurality of bit groups, and the first bit group includes one of the G bits. When the first bit group is of a first value, a rate match pattern group indicated by the first bit group does not exist. In other words, no resource reservation area needs to be removed from an actual transmission resource of a physical shared channel corresponding to the first bit group. Alternatively, when the first bit group is of a second value, the rate match pattern group indicated by the first bit group is one of the P rate match pattern groups. In other words, a resource reservation area of a rate match pattern group needs to be removed from the actual transmission resource of the physical shared channel corresponding to the first bit group. The first bit group may be any one of the plurality of bit groups.

In a possible design, a first bit group is one of the plurality of bit groups, and the first bit group includes one of the G bits. When the first bit group is of a first value, a rate match pattern group indicated by the first bit group is a first rate match pattern group. In other words, a resource reservation area of the first rate match pattern group needs to be removed from an actual transmission resource of a physical shared channel corresponding to the first bit group. Alternatively, when the first bit group is of a second value, the rate match pattern group indicated by the first bit group is a second rate match pattern group. In other words, a resource reservation area of the second rate match pattern group needs to be removed from the actual transmission resource of the physical shared channel corresponding to the first bit group. The first rate match pattern group is one of the P rate match pattern groups, and the second rate match pattern group is another one of the P rate match pattern groups. The first bit group may be any one of the plurality of bit groups.

In a possible design, G=ceil(X/M), ceil(·) indicates a round-up operator, and X indicates a maximum quantity of physical shared channels that can be scheduled by using the control information.

In other words, a bit quantity of the first field is determined based on X and M.

In a possible design, before that the first device sends control information to a second device, the method further includes: The first device sends second configuration information to the second device. The second configuration information is used to configure a value of M, and M is a positive integer less than or equal to X. In this way, the second device can learn of the value of M.

In a possible design, the first bit group is the one of the plurality of bit groups, and the first bit group includes a g^{th} bit in the G bits, or the first bit group includes a (g+G-ceil(L/M))^{th} bit in the G bits. The M physical shared channels are ((g-1)*M+1)^{th} to (g*M)^{th} physical shared channels in the L physical shared channels. A 1^{st} bit in the G bits is a most significant bit MSB, and the G^{th} bit in the G bits is a least significant bit LSB. Alternatively, the 1^{st} bit in the G bits is the LSB, and the G^{th} bit in the G bits is the MSB. g is a positive integer less than floor(L/M), floor(·) indicates a round-down operator, ceil(·) indicates a round-up operator, and / indicates a division operator.

For example, calculation starts from the LSB to the MSB in the G bits. The 1^{st} bit in the G bits is the MSB, and the G^{th} bit in the G bits is the LSB. That the first bit group includes a g^{th} bit in the G bits is a g^{th} bit obtained through calculation starting from the MSB to the LSB in the G bits. That the first bit group includes a (g+G-ceil(L/M))^{th} bit in the G bits is a (g+G-ceil(L/M))^{th} bit obtained through calculation starting from the MSB to the LSB in the G bits.

For another example, calculation starts from the LSB to the MSB in the G bits. The 1^{st} bit in the G bits is the LSB, and the G^{th} bit in the G bits is the MSB. That the first bit group includes a g^{th} bit in the G bits is a g^{th} bit obtained through calculation starting from the LSB to the MSB in the G bits. That the first bit group includes a (g+G-ceil(L/M))^{th} bit in the G bits is a (g+G-ceil(L/M))^{th} bit obtained through calculation starting from the LSB to the MSB in the G bits.

In other words, when g is the positive integer less than floor(L/M), the first bit group indicates the rate match pattern groups for the M physical shared channels.

In a possible design, the first bit group is the one of the plurality of bit groups, and when G*M>L, the first bit group includes a ceil(L/M)^{th} bit in the G bits, or the first bit group includes a G^{th} bit in the G bits. The M physical shared channels are ((ceil(L/M)-1)*M+1)^{th} to L^{th} physical shared channels in the L physical shared channels. A 1^{st} bit in the G bits is a most significant bit MSB, and the G^{th} bit in the G bits is a least significant bit LSB. Alternatively, the 1^{st} bit in the G bits is the LSB, and the G^{th} bit in the G bits is the MSB. ceil(·) indicates the round-up operator, and / indicates a division operator.

For example, calculation starts from the MSB to the LSB in the G bits. The 1^{st} bit in the G bits is the MSB, and the G^{th} bit in the G bits is the LSB. That the first bit group includes a ceil(L/M)^{th} bit in the G bits is a ceil(L/M)^{th} bit obtained through calculation starting from the MSB to the LSB in the G bits. That the first bit group includes a G^{th} bit in the G bits is a G^{th} bit obtained through calculation starting from the MSB to the LSB in the G bits.

For another example, calculation starts from the LSB to the MSB in the G bits. The 1^{st} bit in the G bits is the LSB, and the G^{th} bit in the G bits is the MSB. That the first bit group includes a ceil(L/M)^{th}' bit in the G bits is a ceil(L/M)^{th}' bit obtained through calculation starting from the LSB to the MSB in the G bits. That the first bit group includes a G^{th} bit in the G bits is a G^{th} bit obtained through calculation starting from the LSB to the MSB in the G bits.

In other words, when G*M>L, and the first bit group includes the ceil(L/M)^{th} bit in the G bits, or the first bit group includes the G^{th} bit in the G bits, a physical shared channel quantity corresponding to the first bit group is less than M. That is, the first bit group indicates rate match pattern groups for physical shared channels whose quantity is less than M.

In a possible design, the first bit group is the one of the plurality of bit groups, and the first bit group includes a g^{th} bit in the G bits, or the first bit group includes a (g+G-L)^{th} bit in the G bits. The M physical shared channels are a g^{th} physical shared channel in the L physical shared channels. A 1^{st} bit in the G bits is an LSB, and a G^{th} bit in the G bits is an MSB. Alternatively, The 1^{st} bit in the G bits is the most significant bit MSB, and the G^{th} bit in the G bits is the least significant bit LSB. Alternatively, the 1^{st} bit in the G bits is the LSB, and the G^{th} bit in the G bits is the MSB. g is any positive integer less than or equal to L, and M=1.

For example, calculation starts from the MSB to the LSB in the G bits. The 1^{st} bit in the G bits is the MSB, and the G^{th} bit in the G bits is the LSB. That the first bit group includes a g^{th} bit in the G bits is a g^{th} bit obtained through calculation starting from the MSB to the LSB in the G bits. That the first bit group includes a (g+G-L)^{th} bit in the G bits is a (g+G-L)^{th} bit obtained through calculation starting from the MSB to the LSB in the G bits.

For another example, calculation starts from the LSB to the MSB in the G bits. The 1^{st} bit in the G bits is the LSB, and the G^{th} bit in the G bits is the MSB. That the first bit group includes a g^{th} bit in the G bits is a g^{th} bit obtained through calculation starting from the LSB to the MSB in the G bits. That the first bit group includes a (g+G-L)^{th} bit in the G bits is a (g+G-L)^{th} bit obtained through calculation starting from the LSB to the MSB in the G bits.

In other words, the first bit group indicates a rate match pattern group for one physical shared channel, or each of the G bits indicates the rate match pattern group for the physical shared channel.

In a possible design, the first bit group is the one of the plurality of bit groups, and the first bit group includes a g^{th} bit in the G bits, or the first bit group includes a (g+G-N)^{th} bit in the G bits. The M physical shared channels are ((g-1)*V₁+1)^{th} to (g*V₁)^{th} physical shared channels in the L physical shared channels. A 1^{st} bit in the G bits is a most significant bit MSB, and the G^{th} bit in the G bits is a least significant bit LSB. Alternatively, the 1^{st} bit in the G bits is the LSB, and the G^{th} bit in the G bits is the MSB. g is any positive integer less than or equal to N₁, N₁ is a remainder of L/N, N₁ is a positive integer, N=min(G, L), V₁=ceil(L/N), / indicates a division operator, min(·) indicates a minimum operator, and ceil(·) indicates a round-up operator.

For example, calculation starts from the MSB to the LSB in the G bits. The 1^{st} bit in the G bits is the MSB, and the G^{th} bit in the G bits is the LSB. When g is the positive integer less than or equal to N₁, that the first bit group includes a g^{th} bit in the G bits is a g^{th} bit obtained through calculation starting from the MSB to the LSB in the G bits. That the first bit group includes a (g+G-N)^{th} bit in the G bits is a (g+G-N)^{th} bit obtained through calculation starting from the MSB to the LSB in the G bits.

For another example, calculation starts from the LSB to the MSB in the G bits. The 1^{st} bit in the G bits is the LSB, and the G^{th} bit in the G bits is the MSB. When g is the positive integer less than or equal to N₁, that the first bit group includes a g^{th} bit in the G bits is a g^{th} bit obtained through calculation starting from the LSB to the MSB in the G bits. That the first bit group includes a (g+G-N)^{th} bit in the G bits is a (g+G-N)^{th} bit obtained through calculation starting from the LSB to the MSB in the G bits.

In other words, the first bit group indicates rate match pattern groups for V₁ physical shared channels.

In a possible design, the first bit group is the one of the plurality of bit groups, and the first bit group includes a g^{th} bit in the G bits, or the first bit group includes a (g+G-N)^{th} bit in the G bits. The M physical shared channels are (N₁*V₁+(g-N₁-1)*V₂+1)^{th} to (N₁*V₁+(g-N₁-1)*V₂+V₂)^{th} physical shared channels in the L physical shared channels. A 1^{st} bit in the G bits is a most significant bit MSB, and the G^{th} bit in the G bits is a least significant bit LSB. Alternatively, the 1^{st} bit in the G bits is the LSB, and the G^{th} bit in the G bits is the MSB. g is any positive integer greater than N₁ and less than or equal to N, N₁ is a remainder of L/N, N₁ is a positive integer, N=min(G, L), V₁=ceil(L/N), V₂=floor(L/N), / indicates a division operator, min(·) indicates a minimum operator, ceil(·) indicates a round-up operator, and floor(·) indicates a round-down operator.

For example, calculation starts from the MSB to the LSB in the G bits. The 1^{st} bit in the G bits is the MSB, and the G^{th} bit in the G bits is the LSB. When g is the positive integer greater than N₁ and less than or equal to N, that the first bit group includes a g^{th} bit in the G bits is a g^{th} bit obtained through calculation starting from the MSB to the LSB in the G bits. That the first bit group includes a (g+G-N)^{th} bit in the G bits is a (g+G-N)^{th} bit obtained through calculation starting from the MSB to the LSB in the G bits.

For another example, calculation starts from the LSB to the MSB in the G bits. The 1^{st} bit in the G bits is the LSB, and the G^{th} bit in the G bits is the MSB. When g is the positive integer greater than N₁ and less than or equal to N, that the first bit group includes a g^{th} bit in the G bits is a g^{th} bit obtained through calculation starting from the LSB to the MSB in the G bits. That the first bit group includes a (g+G-N)^{th} bit in the G bits is a (g+G-N)^{th} bit obtained through calculation starting from the LSB to the MSB in the G bits.

In other words, the first bit group indicates rate match pattern groups for V₂ physical shared channels.

In a possible design, G=X. X indicates a maximum quantity of physical shared channels that can be scheduled by using the control information.

In this way, the G bits in the first field may indicate each physical shared channel that can be scheduled by using the control information.

In a possible design, before that the first device sends control information to a second device, the method further includes: The first device sends third configuration information to the second device. The third configuration information is used to configure a value of G.

In other words, the first device configures the value of G for the second device.

In a possible design, a first bit group is one of the plurality of bit groups, the first bit group includes at least two adjacent bits in the G bits, and M=1. The first bit group may be any one of the plurality of bit groups. In other words, the first bit group indicates a rate match pattern group for one physical shared channel.

In a possible design, the first bit group includes a (2*g-1)^{th} bit and a (2*g)^{th} bit in the G bits, or the first bit group includes a (2*(X-L+g)-1)^{th} bit and a (2*(X-L+g))^{th} bit in the G bits. The M physical shared channels are a g^{th} physical shared channel in the L physical shared channels. A 1^{st} bit in the G bits is a most significant bit MSB, and a G^{th} bit in the G bits is a least significant bit LSB. Alternatively, the 1^{st} bit in the G bits is the LSB, and the G^{th} bit in the G bits is the MSB. G is a positive integer greater than or equal to 2L, g is any positive integer less than or equal to L, and X indicates a maximum quantity of physical shared channels that can be scheduled by using the control information.

For example, calculation starts from the MSB to the LSB in the G bits. The 1^{st} bit in the G bits is the MSB, and the G^{th} bit in the G bits is the LSB. The (2*g-1)^{th} bit in the G bits is a (2*g-1)^{th} bit obtained through calculation starting from the MSB to the LSB in the G bits. The (2*g)^{th} bit in the G bits is a (2*g)^{th} bit obtained through calculation starting from the MSB to the LSB in the G bits. The (2*(X-L+g)-1)^{th} bit in the G bits is a (2*(X-L+g)-1)^{th} bit obtained through calculation starting from the MSB to the LSB in the G bits. The (2*(X-L+g))^{th} bit in the G bits is a (2*(X-L+g))^{th} bit obtained through calculation starting from the MSB to the LSB in the G bits.

For example, calculation starts from the LSB to the MSB in the G bits. The 1^{st} bit in the G bits is the LSB, and the G^{th} bit in the G bits is the MSB. The (2*g-1)^{th} bit in the G bits is a (2*g-1)^{th} bit obtained through calculation starting from the LSB to the MSB in the G bits. The (2*g)^{th} bit in the G bits is a (2*g)^{th} bit obtained through calculation starting from the LSB to the MSB in the G bits. The (2*(X-L+g)-1)^{th} bit in the G bits is a (2*(X-L+g)-1)^{th} bit obtained through calculation starting from the LSB to the MSB in the G bits. The (2*(X-L+g))^{th} bit in the G bits is a (2*(X-L+g))^{th} bit obtained through calculation starting from the LSB to the MSB in the G bits.

In other words, the first bit group indicates a rate match pattern group for one physical shared channel.

In a possible design, G=2X. In this way, the G bits in the first field may indicate each physical shared channel that can be scheduled by using the control information.

In a possible design, the first bit group includes the (2*g-1)^{th} bit and the (2*g)^{th} bit in the G bits. When the (2*g-1)^{th} bit in the G bits is of a first value, and the (2*g)^{th} bit is of the first value, a rate match pattern group indicated by the first bit group does not exist. In other words, no resource reservation area needs to be removed from an actual transmission resource of the physical shared channel corresponding to the first bit group.

When the (2*g-1)^{th} bit in the G bits is of a second value, and the (2*g)^{th} bit is of the first value, the rate match pattern group indicated by the first bit group is a first rate match pattern group. In other words, a resource reservation area of the first rate match pattern group needs to be removed from the actual transmission resource of the physical shared channel corresponding to the first bit group.

When the (2*g-1)^{th} bit in the G bits is of the first value, and the (2*g)^{th} bit is of the second value, the rate match pattern group indicated by the first bit group is a second rate match pattern group. In other words, a resource reservation area of the second rate match pattern group needs to be removed from the actual transmission resource of the physical shared channel corresponding to the first bit group.

When the (2*g-1)^{th} bit in the G bits is of the second value, and the (2*g)^{th} bit is of the second value, rate match pattern groups indicated by the first bit group are the first rate match pattern group and the second rate match pattern group. In other words, the resource reservation areas of the first rate match pattern group and the second rate match pattern group need to be removed from the actual transmission resource of the physical shared channel corresponding to the first bit group.

The 1^{st} bit in the G bits is the most significant bit MSB, and the G^{th} bit in the G bits is the least significant bit LSB. Alternatively, the 1^{st} bit in the G bits is the LSB, and the G^{th} bit in the G bits is the MSB. g is the positive integer less than or equal to L. The first rate match pattern group is one of the P rate match pattern groups, and the second rate match pattern group is another one of the P rate match pattern groups.

In a possible design, P is 2.

In a possible design, before that the first device sends control information to a second device, the method further includes: The first device sends fourth configuration information to the second device. The fourth configuration information is used to configure a value of X, X indicates a maximum quantity of physical shared channels that can be scheduled by using the control information, and X is a positive integer greater than or equal to L.

In other words, the first device configures the value of X for the second device.

In a possible design, when the first device is a network device, and the second device is a terminal device, the control information is downlink control information DCI, the L physical shared channels are L physical downlink shared channels PDSCH, and the first field is a rate matching indicator field.

In a possible design, when the first device is a first terminal device, and the second device is a second terminal device, the control information is sidelink control information SCI, and the L physical shared channels are L physical sidelink shared channels PSSCH.

According to a second aspect, a communication method is provided. The method may be executed by a second device or a chip applied to the second device. The following provides descriptions by using an example in which the method is executed by the second device. The method includes: The second device receives control information from a first device. The control information indicates L physical shared channels and L first resources. An i^{th} first resource in the L first resources is a time-frequency resource allocated to an i^{th} physical shared channel in the L physical shared channels. The control information includes a first field, the first field includes G bits, the G bits indicate L rate match pattern groups, the G bits include a plurality of bit groups, each of the plurality of bit groups indicates rate match pattern groups for a maximum of M physical shared channels, the M physical shared channels are a part of the L physical shared channels, and the rate match pattern groups indicated by each of the plurality of bit groups are a part of the L rate match pattern groups. M is a positive integer less than L, and G is a positive integer greater than or equal to 2. An i^{th} rate match pattern group in the L rate match pattern groups indicates an i^{th} second resource, and the i^{th} second resource is a time-frequency resource that is indicated by the control information and that cannot be occupied by the i^{th} physical shared channel. The second device receives the L physical shared channels from the first device based on the control information. The i^{th} physical shared channel in the L physical shared channels occupies an i^{th} third resource. When the i^{th} second resource exists and the i^{th} second resource overlaps the i^{th} first resource, the i^{th} third resource is a resource other than an overlapping resource in the i^{th} first resource, and the overlapping resource is an overlapping resource between the i^{th} second resource and the i^{th} first resource. Alternatively, when the i^{th} second resource does not exist, the i^{th} third resource is the i^{th} first resource. L is a positive integer greater than 1, and i is any positive integer less than or equal to L.

In a possible design, before that the second device receives control information from a first device, the method further includes: The second device receives first configuration information from the first device. The first configuration information is used to configure P rate match pattern groups, any one of the L rate match pattern groups is at most one of the P rate match pattern groups, and P is a positive integer greater than 1.

In a possible design, a first bit group is one of the plurality of bit groups, and the first bit group includes one of the G bits. When the first bit group is of a first value, a rate match pattern group indicated by the first bit group does not exist. Alternatively, when the first bit group is of a second value, the rate match pattern group indicated by the first bit group is one of the P rate match pattern groups.

In a possible design, a first bit group is one of the plurality of bit groups, and the first bit group includes one of the G bits. When the first bit group is of a first value, a rate match pattern group indicated by the first bit group is a first rate match pattern group. Alternatively, when the first bit group is of a second value, the rate match pattern group indicated by the first bit group is a second rate match pattern group. The first rate match pattern group is one of the P rate match pattern groups, and the second rate match pattern group is another one of the P rate match pattern groups.

In a possible design, G=ceil(X/M), ceil(·) indicates a round-up operator, and X indicates a maximum quantity of physical shared channels that can be scheduled by using the control information.

In a possible design, before that the second device receives control information from a first device, the method further includes: The second device receives second configuration information from the first device. The second configuration information is used to configure a value of M, and M is a positive integer less than or equal to X.

In a possible design, the first bit group is the one of the plurality of bit groups, and the first bit group includes a g^{th} bit in the G bits, or the first bit group includes a (g+G-ceil(L/M))^{th} bit in the G bits. The M physical shared channels are ((g-1)*M+1)^{th} to (g*M)^{th} physical shared channels in the L physical shared channels. A 1^{st} bit in the G bits is a most significant bit MSB, and the G^{th} bit in the G bits is a least significant bit LSB. Alternatively, the 1^{st} bit in the G bits is the LSB, and the G^{th} bit in the G bits is the MSB. g is a positive integer less than floor(L/M), floor(·) indicates a round-down operator, ceil(·) indicates the round-up operator, and / indicates a division operator.

In a possible design, the first bit group is the one of the plurality of bit groups, and when G*M>L, the first bit group includes a ceil(L/M)^{th} bit in the G bits, or the first bit group includes a G^{th} bit in the G bits. The M physical shared channels are ((ceil(L/M)-1)*M+1)^{th} to L^{th} physical shared channels in the L physical shared channels. A 1^{st} bit in the G bits is a most significant bit MSB, and the G^{th} bit in the G bits is a least significant bit LSB. Alternatively, the 1^{st} bit in the G bits is the LSB, and the G^{th} bit in the G bits is the MSB. ceil(·) indicates the round-up operator, and / indicates a division operator.

In a possible design, the first bit group is the one of the plurality of bit groups, and the first bit group includes a g^{th} bit in the G bits, or the first bit group includes a (g+G-L)^{th} bit in the G bits. The M physical shared channels are a g^{th} physical shared channel in the L physical shared channels. A 1^{st} bit in the G bits is a most significant bit MSB, and the G^{th} bit in the G bits is a least significant bit LSB. Alternatively, the 1^{st} bit in the G bits is the LSB, and the G^{th} bit in the G bits is the MSB. g is any positive integer less than or equal to L, and M=1.

In a possible design, the first bit group is the one of the plurality of bit groups, and the first bit group includes a g^{th} bit in the G bits, or the first bit group includes a (g+G-N)^{th} bit in the G bits. The M physical shared channels are ((g-1)*V₁+1)^{th} to (g*V₁)^{th} physical shared channels in the L physical shared channels. A 1^{st} bit in the G bits is a most significant bit MSB, and the G^{th} bit in the G bits is a least significant bit LSB. Alternatively, the 1^{st} bit in the G bits is the LSB, and the G^{th} bit in the G bits is the MSB. g is any positive integer less than or equal to N₁, N₁ is a remainder of L/N, N₁ is a positive integer, N=min(G, L), V₁=ceil(L/N), / indicates a division operator, min(·) indicates a minimum operator, and ceil(·) indicates a round-up operator.

In a possible design, the first bit group is the one of the plurality of bit groups, and the first bit group includes a g^{th} bit in the G bits, or the first bit group includes a (g+G-N)^{th} bit in the G bits. The M physical shared channels are (N₁*V₁+(g-N₁-1)*V₂+1)^{th} to (N₁*V₁+(g-N₁-1)*V₂+V₂)^{th} physical shared channels in the L physical shared channels. A 1^{st} bit in the G bits is a most significant bit MSB, and the G^{th} bit in the G bits is a least significant bit LSB. Alternatively, the 1^{st} bit in the G bits is the LSB, and the G^{th} bit in the G bits is the MSB. g is any positive integer greater than N₁ and less than or equal to N, N₁ is a remainder of L/N, N₁ is a positive integer, N=min(G, L), V₁=ceil(L/N), V₂=floor(L/N), / indicates a division operator, min(·) indicates a minimum operator, ceil(·) indicates a round-up operator, and floor(·) indicates a round-down operator.

In a possible design, G=X. X indicates a maximum quantity of physical shared channels that can be scheduled by using the control information.

In a possible design, before that the second device receives control information from a first device, the method further includes: The second device receives third configuration information from the first device. The third configuration information is used to configure a value of G.

In a possible design, a first bit group is one of the plurality of bit groups, the first bit group includes at least two adjacent bits in the G bits, and M=1.

In a possible design, the first bit group includes a (2*g-1)^{th} bit and a (2*g)^{th} bit in the G bits, or the first bit group includes a (2*(X-L+g)-1)^{th} bit and a (2*(X-L+g))^{th} bit in the G bits. The M physical shared channels are a g^{th} physical shared channel in the L physical shared channels. A 1^{st} bit in the G bits is a most significant bit MSB, and a G^{th} bit in the G bits is a least significant bit LSB. Alternatively, the 1^{st} bit in the G bits is the LSB, and the G^{th} bit in the G bits is the MSB. G is a positive integer greater than or equal to 2L, g is any positive integer less than or equal to L, and X indicates a maximum quantity of physical shared channels that can be scheduled by using the control information.

In a possible design, G=2X.

In a possible design, the first bit group includes the (2*g-1)^{th} bit and the (2*g)^{th} bit in the G bits. When the (2*g-1)^{th} bit in the G bits is of a first value, and the (2*g)^{th} bit is of the first value, a rate match pattern group indicated by the first bit group does not exist. Alternatively, when the (2*g-1)^{th} bit in the G bits is of a second value, and the (2*g)^{th} bit is of the first value, the rate match pattern group indicated by the first bit group is a first rate match pattern group. Alternatively, when the (2*g-1)^{th} bit in the G bits is of the first value, and the (2*g)^{th} bit is of the second value, the rate match pattern group indicated by the first bit group is a second rate match pattern group. Alternatively, when the (2*g-1)^{th} bit in the G bits is of the second value, and the (2*g)^{th} bit is of the second value, rate match pattern groups indicated by the first bit group are the first rate match pattern group and the second rate match pattern group. The 1^{st} bit in the G bits is the most significant bit MSB, and the G^{th} bit in the G bits is the least significant bit LSB. Alternatively, the 1^{st} bit in the G bits is the LSB, and the G^{th} bit in the G bits is the MSB. g is the positive integer less than or equal to L. The first rate match pattern group is one of the P rate match pattern groups, and the second rate match pattern group is another one of the P rate match pattern groups.

In a possible design, P is 2.

In a possible design, before that the second device receives control information from a first device, the method further includes: The second device receives fourth configuration information from the first device. The fourth configuration information is used to configure a value of X, X indicates a maximum quantity of physical shared channels that can be scheduled by using the control information, and X is a positive integer greater than or equal to L.

In a possible design, when the second device is a network device, and the first device is a terminal device, the control information is downlink control information DCI, the L physical shared channels are L physical downlink shared channels PDSCH, and the first field is a rate matching indicator field.

In a possible design, when the second device is a first terminal device and the first device is a second terminal device, the control information is sidelink control information SCI, and the L physical shared channels are L physical sidelink shared channels PSSCH.

According to a third aspect, a communication apparatus is provided. The communication apparatus includes a processor. The processor is coupled to a memory, and is configured to read and execute instructions in the memory, to enable the communication apparatus to perform the method performed by the first device according to any one of the foregoing aspects or the possible designs of the foregoing aspects. The communication apparatus may be the first device according to any one of the first aspect or the possible designs of the first aspect, or a chip that implements a function of the first device.

According to a fourth aspect, a chip is provided. The chip includes a processing circuit and an input/output interface. The input/output interface is configured to communicate with a module outside the chip. For example, the chip may be a chip that implements a function of the first device according to any one of the first aspect or the possible designs of the first aspect. The processing circuit is configured to run a computer program or instructions, to implement the method according to any one of the first aspect or the possible designs of the first aspect.

According to a fifth aspect, a communication apparatus is provided. The communication apparatus includes a processor. The processor is coupled to a memory, and is configured to read and execute instructions in the memory, to enable the communication apparatus to perform the method performed by the second device according to any one of the foregoing aspects or the possible designs of the foregoing aspects. The communication apparatus may be the second device according to any one of the second aspect or the possible designs of the second aspect, or a chip that implements a function of the second device.

According to a sixth aspect, a chip is provided. The chip includes a processing circuit and an input/output interface. The input/output interface is configured to communicate with a module outside the chip. For example, the chip may be a chip that implements a function of the second device according to any one of the second aspect or the possible designs of the second aspect. The processing circuit is configured to run a computer program or instructions, to implement the method according to any one of the second aspect or the possible designs of the second aspect.

According to a seventh aspect, a computer-readable storage medium is provided. The computer-readable storage medium stores instructions, and when the instructions are run on a computer, the computer is enabled to perform the method according to any one of the foregoing aspects.

According to an eighth aspect, a computer program product including instructions is provided. When the instructions are run on a computer, the computer is enabled to perform the method according to any one of the foregoing aspects.

According to a ninth aspect, a circuit system is provided. The circuit system includes a processing circuit configured to perform the method according to any one of the foregoing aspects.

According to a tenth aspect, a communication system is provided, including a first device and a second device. The first device is configured to perform the method according to any one of the first aspect and the possible designs of the first aspect, and the second device is configured to perform the method according to any one of the second aspect and the possible designs of the second aspect.

For technical effect brought by any design of the second aspect to the tenth aspect, refer to beneficial effect in the corresponding method provided above. Details are not described herein again.

### BRIEF DESCRIPTION OF DRAWINGS

FIG. 1 is a diagram of an architecture of a communication system according to an embodiment of this application;
FIG. 2 is a diagram of a scheduling scenario according to an embodiment of this application;
FIG. 3 is a diagram of still another scheduling scenario according to an embodiment of this application;
FIG. 4 is a diagram of another scheduling scenario according to an embodiment of this application;
FIG. 5 is a diagram of resource distribution of a rate match pattern according to an embodiment of this application;
FIG. 6 is a diagram of resource distribution of a rate match pattern group according to an embodiment of this application;
FIG. 7 is a diagram of another scheaduling scenario according to an embodiment of this application;
FIG. 8 is a schematic flowchart of a communication method according to an embodiment of this application;
FIG. 9 is a diagram of resource distribution of still another rate match pattern group according to an embodiment of this application;
FIG. 10 is a diagram of another scheduling scenario according to an embodiment of this application;
FIG. 11 is a diagram of a first field according to an embodiment of this application;
FIG. 12 is a diagram of still another first field according to an embodiment of this application;
FIG. 13 is a diagram of another first field according to an embodiment of this application;
FIG. 14 is a diagram of another first field according to an embodiment of this application;
FIG. 15 is a diagram of another first field according to an embodiment of this application;
FIG. 16 is a schematic flowchart of still another communication method according to an embodiment of this application; and
FIG. 17 is a diagram of a structure of a communication apparatus according to an embodiment of this application.

### DESCRIPTION OF EMBODIMENTS

The following describes technical solutions of this application with reference to accompanying drawings.

The technical solutions in embodiments of this application may be applied to various communication systems, for example, a universal mobile telecommunications system (universal mobile telecommunications system, UMTS), a wireless local area network (wireless local area network, WLAN), a wireless fidelity (wireless fidelity, Wi-Fi) system, a wired network, a vehicle to everything (vehicle to everything, V2X) communication system, a device-to-device (device-to-device, D2D) communication system, an internet of vehicles communication system, a 4th generation (4th generation, 4G) mobile communication system, for example, a long term evolution (long term evolution, LTE) system or a worldwide interoperability for microwave access (worldwide interoperability for microwave access, WiMAX) communication system, a 5th generation (5th generation, 5G) mobile communication system, for example, a new radio (new radio, NR) system, and a 6th generation (6th generation, 6G) mobile communication system.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, terms such as "example" or "for example" are used to represent giving an example, an illustration, or a description. Any embodiment or design scheme described as an "example" in this application should not be explained as being more preferred or having more advantages than another embodiment or design scheme. Exactly, the term "example" is used to present a concept in a specific manner.

In embodiments of this application, "of (of)", "corresponding (corresponding, relevant)", and "corresponding (corresponding)" may be interchangeably used sometimes. It should be noted that meanings expressed by the terms are consistent when differences are not emphasized.

A network architecture and a service scenario described in embodiments of this application are intended to describe the technical solutions in embodiments of this application more clearly, and do not constitute a limitation on the technical solutions according to embodiments of this application. A person of ordinary skill in the art may know that with evolution of a network architecture and emergence of a new service scenario, the technical solutions according to embodiments of this application are also applicable to similar technical problems.

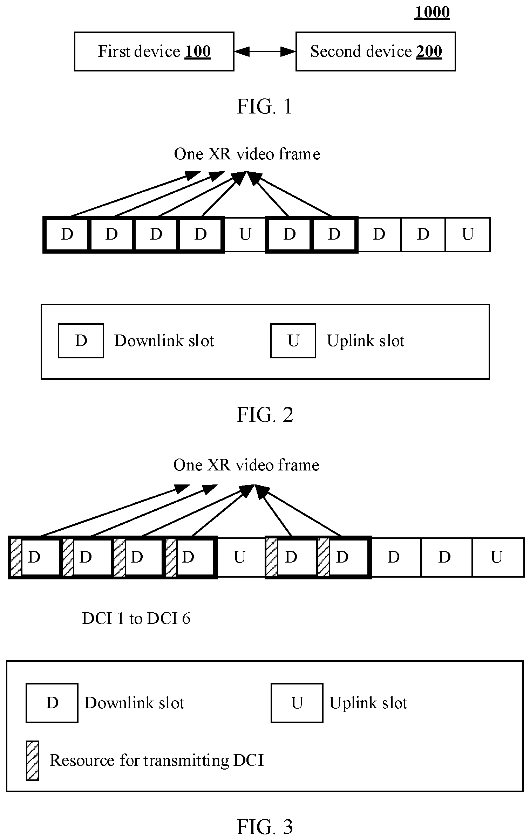

For case of understanding embodiments of this application, a communication system shown in FIG. 1 is first used as an example to describe in detail a communication system applicable to embodiments of this application. For example, FIG. 1 is a diagram of an architecture of a communication system to which a method according to embodiments of this application is applicable.

As shown in FIG. 1, the communication system 1000 includes a first device 100 and a second device 200.

In some embodiments, both the first device 100 and the second device 200 may be terminal devices. Optionally, the communication system 1000 further includes a network device (not shown in FIG. 1). The first device 100 communicates with the second device 200 through a sidelink (or a PC5 interface), and the second device 200 may communicate with the network device through the first device 100. Both the first device 100 and the second device 200 may be within network coverage, or one of the first device 100 and the second device 200 may be within the network coverage and the other may be outside the network coverage, or both the first device 100 and the second device 200 may be outside the network coverage. When both the first device 100 and the second device 200 are within the network coverage, a serving base station of the first device 100 may be the same as or different from a serving base station of the second device 200.

In some other embodiments, the first device 100 is a terminal device, and the second device 200 is a network device. Alternatively, the first device 100 is the network device, and the second device 200 is the terminal device.

The terminal device is a terminal having wireless sending and receiving functions. In this application, the terminal device may also be referred to as a terminal, user equipment (user equipment, UE), an access terminal, a subscriber unit, a subscriber station, a mobile station, a remote station, a remote terminal, a mobile device, a user terminal, a wireless communication device, a user agent, or a user apparatus. The terminal in embodiments of this application may be a road side unit (road side unit, RSU), a mobile phone (mobile phone), a tablet computer (pad), an unmanned aerial vehicle, a computer having wireless sending and receiving functions, customer-premises equipment (customer-premises equipment, CPE), a virtual reality (virtual reality, VR) terminal, an augmented reality (augmented reality, AR) terminal, an Internet of things terminal, a wireless terminal in industrial control (industrial control), a wireless terminal in self driving (self driving), a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal in a 5G network, a terminal in a future evolved network, or the like.

For another example, the terminal device in embodiments of this application may be an express delivery terminal (for example, a device that can monitor a position of a cargo vehicle, or a device that can monitor a temperature and humidity of cargo) in intelligent logistics, a wireless terminal (for example, a wearable device that can collect related data of poultry and livestock) in intelligent agriculture, a wireless terminal (for example, a smart elevator, a fire monitoring device, or a smart meter) in intelligent architecture, a wireless terminal (for example, a wearable device that can monitor a physiological status of a person or an animal) in intelligent healthcare, a wireless terminal (for example, an intelligent bus, an intelligent vehicle, a shared bicycle, a charging pile monitoring device, intelligent traffic lights, or an intelligent monitoring and intelligent parking device) in intelligent transportation, or a wireless terminal (for example, a vending machine, a self-service checkout machine, or an unmanned convenience store) in intelligent retail. For another example, the terminal device in this application may be a vehicle-mounted module, a vehicle-mounted assembly, a vehicle-mounted component, a vehicle-mounted chip, or a vehicle-mounted unit that is built in a vehicle as one or more components or units. The vehicle may implement the method according to this application by using the vehicle-mounted module, the vehicle-mounted assembly, the vehicle-mounted component, the vehicle-mounted chip, or the vehicle-mounted unit that is built in the vehicle.

The network device may communicate with the terminal device, for example, through a Uu interface. For example, the network device may also be referred to as an access network device, an access device, or a radio access network device. The network device can manage a radio resource, provide an access service for the terminal device, and complete data forwarding between the terminal device and a core network. The network device may also be understood as a base station in a network.

For example, the network device in embodiments of this application may be any communication device that has wireless sending and receiving functions and that is configured to communicate with the terminal device. The network device includes but is not limited to an RSU, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (a home evolved NodeB, HeNB, or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission reception point, TRP), or the like. Alternatively, the network device may be a gNB or a transmission point (TRP or TP) in a 5G system like an NR system, may be one antenna panel or a group of antenna panels (including a plurality of antenna panels) of a base station in the 5G system, may be a network node, for example, a baseband unit (BBU) or a distributed unit (distributed unit, DU), that constitutes a gNB or a transmission point, or may be a satellite, an unmanned aerial vehicle, or the like.

In some deployments, a gNB may include a central unit (central unit, CU) and a DU. The gNB may further include an active antenna unit (active antenna unit, AAU). The CU performs some functions of the gNB, and the DU performs some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is generated by the CU, and is finally encapsulated at the PHY layer of the DU into information at the PHY layer, or is transformed from the information at the PHY layer. Therefore, in this architecture, higher layer signaling, for example, RRC layer signaling, may also be considered to be sent by the DU, or sent by the DU and the AAU. It may be understood that the network device may be a device including one or more of a CU node, a DU node, and an AAU node. In addition, the CU may be classified as an access network device in an access network (radio access network, RAN), or the CU may be classified as an access network device in a core network (core network, CN). This is not limited in this application.

Optionally, the communication system shown in FIG. 1 is applicable to the communication network in question, and is also applicable to a future network, or the like. This is not specifically limited in embodiments of this application.

It should be understood that the method according to embodiments of this application may be applicable to any two nodes shown in FIG. 1. For specific implementation, refer to the following method embodiments. Details are not described herein again.

It should be noted that the solutions in embodiments of this application may also be used in another communication system, and a corresponding name may also be replaced with a name of a corresponding function in the another communication system.

For ease of understanding embodiments of this application, the following first briefly describes terms in embodiments of this application. It should be understood that these descriptions are merely intended to facilitate understanding of embodiments of this application, and shall not constitute any limitation on this application.

### 1. Extended reality (extended reality, XR)

The XR is a reality and virtuality combined human-computer interactive environment generated by using a computer technology and a wearable device. The XR is proposed based on augmented reality (augmented reality, AR), virtual reality (virtual reality, VR), and mixed reality (mixed reality, MR). In other words, to avoid concept confusion, the XR is actually a general term, including the AR, the VR, and the MR. An XR service aims to use a high-speed network and a technology, for example, 360-degree imaging, to achieve interactive immersive experience effect. The XR service has the following characteristics: a large service amount, a high transmission delay requirement (in other words, a transmission delay needs to be minimized), a short interval of arrival of data frames, a definite service periodicity, or the like.

Several physical downlink shared channels (physical downlink shared channel, PDSCH) are usually used to complete transmission of one XR video frame. A data amount that can be carried on each PDSCH is limited. This usually depends on channel quality, a quantity of symbols, a quantity of subcarriers, and the like.

For example, FIG. 2 shows a scenario in which a server sends an XR video frame to a terminal device by using a network device. Six PDSCHs may be used to complete transmission of one XR video frame. In FIG. 2, a time division duplex (time division duplex, TDD) ratio is 4:1, and each TDD cycle includes four downlink slots and one uplink slot.

### 2. Dynamic scheduling

The dynamic scheduling is a common manner in which a network device performs scheduling for a terminal device. To be specific, the network device schedules a PDSCH for the terminal device by sending downlink control information (downlink control information, DCI). To overcome channel fluctuation in a wireless transmission process and adjust a resource size of the PDSCH to adapt to different data amounts, a transmission parameter of the PDSCH usually dynamically changes. The network device notifies, by using the DCI, the terminal device of the parameter of the PDSCH scheduled by using the DCI. For example, the terminal device obtains a time domain resource position of the PDSCH (for example, which slot and symbols in the slot the PDSCH is located in/on) by using a time domain resource allocation (time domain resource allocation, TDRA) field in the DCI. The terminal device obtains a frequency domain resource position of the PDSCH (for example, which resource block (resource block, RB) the PDSCH is located in) by using a frequency domain resource allocation (frequency domain resource allocation, FDRA) field in the DCI.

Table 1 shows a TDRA indication manner. Specifically, Table 1 includes information such as a row index (row index), a position (dmrs-TypeA-Position) of a type A demodulation reference signal (demodulation reference signal, DMRS), a PDSCH mapping type (PDSCH mapping type), K₀, S, and L.

The DMRS is a demodulation reference signal, and is used by a receive end device to evaluate a channel, to demodulate a signal. dmrs-TypeA-Position is a position of the DMRS obtained when the PDSCH mapping type is a type A. For example, a digit 2 indicates that the DMRS is on a 2^{nd} symbol in the slot in which the PDSCH is located, and a digit 3 indicates that the DMRS is on a 3^{rd} symbol in the slot in which the PDSCH is located. The PDSCH mapping type indicates a mapping type of the PDSCH. For example, when the PDSCH mapping type is the type A, a start symbol of the PDSCH is any one of 0 to 3, that is, a 1^{st} symbol to a 4^{th} symbol. When the PDSCH mapping type is a type B, the start symbol of the PDSCH is one of 0 to 12, that is, the 1^{st} symbol to a 13^{th} symbol. K₀ indicates a time offset, of the PDSCH relative to the corresponding DCI, measured in slots. S indicates a start symbol position, of the PDSCH, counting from 0. L indicates a quantity of symbols, occupied by the PDSCH, and counting from 1.

The TDRA field in the DCI uses 4 bits to indicate one of 16 row indexes, to indicate a resource used by the PDSCH. For example, when TDRA=0000, it indicates that the PDSCH uses a row index being 1, that is, a first row. When dmrs-TypeA-Position is preconfigured, the terminal device may learn of the mapping type, the time offset, the time domain start symbol, and a total quantity of symbols of the PDSCH, and the position of the DMRS obtained when the PDSCH mapping type is the type A.

**Table 1**

| Row index | dmrs-TypeA-Position | PDSCH mapping type | K₀ | S | L |
|---|---|---|---|---|---|
| 1 | 2 | Type A | 0 | 2 | 12 |
| | 3 | Type A | 0 | 3 | 11 |
| 2 | 2 | Type A | 0 | 2 | 10 |
| | 3 | Type A | 0 | 3 | 9 |
| 3 | 2 | Type A | 0 | 2 | 9 |
| | 3 | Type A | 0 | 3 | 8 |
| 4 | 2 | Type A | 0 | 2 | 7 |
| | 3 | Type A | 0 | 3 | 6 |
| 5 | 2 | Type A | 0 | 2 | 5 |
| | 3 | Type A | 0 | 3 | 4 |
| 6 | 2 | Type B | 0 | 9 | 4 |
| | 3 | Type B | 0 | 10 | 4 |
| 7 | 2 | Type B | 0 | 4 | 4 |
| | 3 | Type B | 0 | 6 | 4 |
| 8 | 2,3 | Type B | 0 | 5 | 7 |
| 9 | 2,3 | Type B | 0 | 5 | 2 |
| 10 | 2,3 | Type B | 0 | 9 | 2 |
| 11 | 2,3 | Type B | 0 | 12 | 2 |
| 12 | 2,3 | Type A | 0 | 1 | 13 |
| 13 | 2,3 | Type A | 0 | 1 | 6 |
| 14 | 2,3 | Type A | 0 | 2 | 4 |
| 15 | 2,3 | Type B | 0 | 4 | 7 |
| 16 | 2,3 | Type B | 0 | 8 | 4 |

In addition, the terminal device determines a modulation order (modulation order) and a channel coding code rate of the PDSCH by using a modulation and coding scheme (modulation and coding scheme, MCS) field in the DCI, to correctly decode the received data carried on the PDSCH.

In an implementation, as shown in FIG. 3, one XR video frame is transmitted by using six PDSCHs, and each PDSCH corresponds to one piece of DCI for indication. In other words, the six PDSCHs are indicated by six pieces of separate DCI. For example, a PDSCH in a 1^{st} D slot (namely, a downlink slot) is indicated by DCI 1, and a PDSCH in a 2^{nd} D slot is indicated by DCI 2. A relationship between another PDSCH and DCI may be deduced by analogy. Details are not described again. The PDSCH and the DCI shown in FIG. 3 are located in a same slot. For example, first two (or three) symbols in 14 symbols in one slot are physical downlink control channel (physical downlink control channel, PDCCH)s, the PDCCHs are used to carry the DCI, and the remaining 12 (or 11) symbols are PDSCHs indicated by the DCI.

It should be understood that the PDCCH and the PDSCH corresponding to the PDCCH may not fully occupy one slot. Alternatively, the PDSCH indicated by the DCI and the DCI may be in different slots, but the PDSCH is later than the DCI. The DCI 1 and the DCI 2 may be in a same format. For example, the DCI 1 is in a DCI format 1_1, and the DCI 2 is also in the DCI format 1_1. Parameter types included in the DCI 1 and the DCI 2 are the same, but parameter values may be different. Alternatively, the DCI 1 and the DCI 2 may be in different DCI formats. For example, the DCI 1 is in the DCI format 1_1, and the DCI 2 is in a DCI format 1_0.

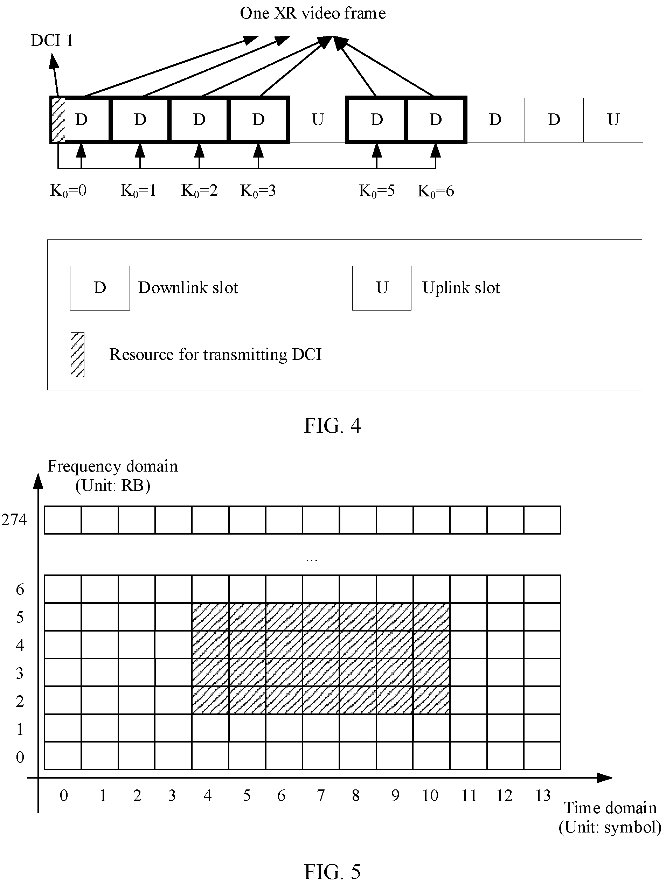

In another implementation, one piece of DCI may indicate a plurality of PDSCHs. As shown in FIG. 4, six PDSCHs are indicated by the DCI 1.

A problem of scheduling a plurality of PDSCHs by using a single piece of DCI is that the DCI cannot flexibly indicate a parameter of each PDSCH scheduled by using the DCI. In other words, if it is expected that the DCI can be used to schedule the plurality of PDSCHs, and to achieve same flexibility as scheduling a single PDSCH by using a single piece of DCI, a size of the DCI needs to be greatly increased, and overheads are unacceptable. For example, each piece of DCI in FIG. 3 indicates an MCS parameter of a corresponding PDSCH, to properly adapt to a changing channel in time. However, in a manner shown in FIG. 4, if one MCS is indicated for each PDSCH, the MCS field needs to be increased by six times. In other words, overheads are six times those of the original MCS field. To enable one piece of DCI to schedule a plurality of PDSCHs without increasing DCI overheads, scheduling flexibility needs to be sacrificed for the plurality of PDSCHs scheduled by using the DCI. For example, one field (for example, an MCS field) in the DCI is applicable to all PDSCHs scheduled by using the DCI.

However, not all DCI fields require multiplying overheads. As shown in FIG. 4, time domain resources of the six PDSCHs may be indicated by one TDRA field. Specifically, the network device may configure a plurality of PDSCH resources for the terminal device through RRC signaling. For example, each row in Table 1 indicates one PDSCH resource configuration, and more columns are inserted, for example, two columns of K₀, two columns of PDSCH mapping types, two columns of S, and two columns of L, so that one piece of DCI can be used to schedule two PDSCHs.

In comparison with a manner in which one piece of DCI is used to schedule one PDSCH in FIG. 3, a manner in which one piece of DCI is used to schedule a plurality of PDSCHs in FIG. 4 can reduce sending of DCI, that is, some slots, for example, 2^{nd} to 6^{th} D slots in FIG. 4, do not need a PDCCH. A saved time-frequency resource of the PDCCH may be used for PDSCH transmission, to increase capacity of the PDSCH.

However, a problem of multiplexing the PDCCH and the PDSCH is not simple. For example, a time-frequency resource occupied by a PDSCH of a terminal device needs to be prevented from overlapping with a PDCCH of another terminal device, to avoid impact on decoding performance of the PDCCH of the another terminal device. To resolve this problem, in a related standard, a rate match pattern (rate match pattern) is set to divide (or reserve) some time-frequency resources for resources in one slot. When mapping the PDSCH to the time-frequency resources, the network device needs to avoid the reserved resources. In other words, the reserved resources are not used to transmit the PDSCH. FIG. 5 is a diagram of resource distribution of a rate match pattern. In FIG. 5, a slashed part is a resource corresponding to the rate match pattern, that is, the PDSCH does not occupy the resource in this part of area.

In some embodiments, the rate match pattern may be indicated by a bitmap (bitmap). For example, the network device configures the rate match pattern for the terminal device by using a RateMatchPattern information element (information element, IE) in the radio resource control (radio resource control, RRC) signaling. FIG. 5 is used as an example. The network device may indicate a time domain position of the rate match pattern through symbolsInResourceBlock signaling in the RateMatchPattern IE, and indicate a frequency domain position of the rate match pattern through resourceBlocks signaling in the RateMatchPattern IE. For example, symbolsInResourceBlock is a 14-bit bitmap, and resourceBlocks is a 275-bit bitmap. FIG. 5 is used as an example. A value of symbolsInResourceBlock is 00001111111000, indicating that the rate match pattern includes time domain symbols 4 to 10. A value of resourceBlocks is 0011110000...000 (275 bits, where "..." indicates that all bits are 0s), indicating that the rate match pattern includes an RB 2 to an RB 5 in frequency domain.

In some other embodiments, the network device may alternatively configure a rate match pattern through control resource set (controlResourceSet, CORESET) signaling of the RateMatchPattern IE in the RRC signaling. Specifically, the network device indicates a control resource set index (controlResourceSetId) through the controlResourceSet signaling, a corresponding CORESET is configured for the index, and the CORESET is configured by the network device by using a ControlResourceSet IE in the RRC signaling. The network device configures a frequency domain parameter for the CORESET through frequencyDomainResources signaling in the controlResourceSet signaling. The parameter is a 45-bit bitmap, and each bit indicates six RBs. In addition, the network device configures a time domain length, for example, seven symbols, for the CORESET through duration (duration) signaling. A specific time domain start location of the CORESET is determined by a search space set (search space set, SSS) corresponding to the CORESET. The network device configures an SSS for the terminal device by using a SearchSpace IE in the RRC signaling, and associates the SSS with a corresponding CORESET by using a controlResourceSetId in the SearchSpace IE. In addition, the network device may determine, in the SearchSpace IE through monitoringSymbolsWithinSlot signaling or the like, a time domain position of the SSS configured by the network device in one slot. Specifically, the monitoringSymbolsWithinSlot signaling also indicates a 14-bit bitmap. The terminal device may determine, based on the ControlResourceSet IE and the SearchSpace IE, time-frequency domain positions of the CORESET configured by using the ControlResourceSet IE, and then further determine the rate match pattern based on the controlResourceSet signaling.

It should be understood that FIG. 5 shows resource distribution of only one rate match pattern. In a related technology, the network device may configure two rate match pattern groups (rate match pattern groups) for the terminal device through the RRC signaling. Each rate match pattern group may include a maximum of eight rate match patterns, and each rate match pattern may be obtained by using the foregoing two methods. When the rate match pattern group includes a plurality of rate match patterns, a finally reserved area is a union set of the plurality of rate match patterns.

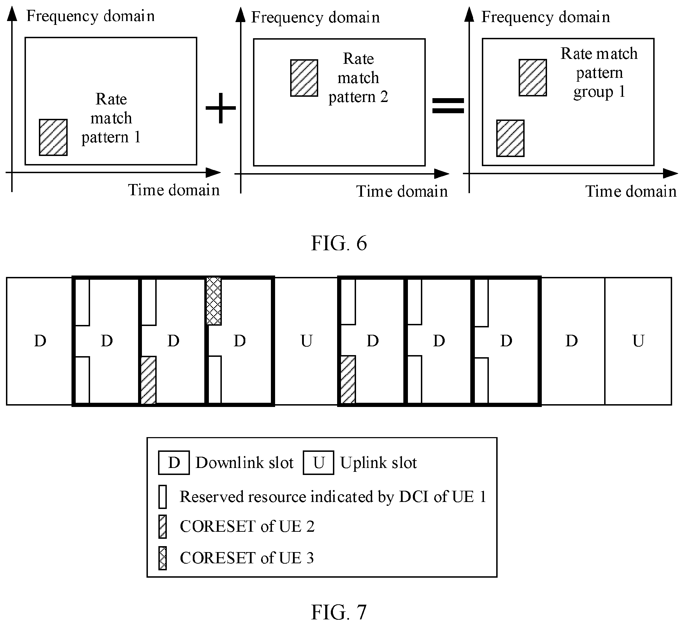

FIG. 6 shows resource distribution of a rate match pattern group. In FIG. 6, rateMatchPatternGroup1 includes two rate match patterns: rateMatchPattern1 and rateMatchPattern2, and the two rate match patterns appear in a same slot. Each large rectangular box may be understood as one slot, each small rectangular box filled with slashes may be understood as one rate match pattern, and rateMatchPatternGroup1 is a union set of the two rate match patterns.

When mapping data to the time-frequency resource of the PDSCH, a transmit end device needs to avoid these reserved parts. Similarly, when receiving data, a receive end device also separately processes the data.

When the rate match pattern group is configured for the terminal device in the foregoing manner, the rate match pattern group may not be directly activated, but whether the rate match pattern group is enabled for the PDSCH scheduled by using the DCI is dynamically indicated by the DCI. Specifically, in an implementation, the network device configures two rate match pattern groups for the terminal device through rateMatchPatternGroup1 and rateMatchPatternGroup2 signaling in a physical downlink shared channel configuration PDSCH-config IE (or a physical uplink shared channel (physical uplink shared channel, PUSCH) configuration (PUSCH-config IE) ) in the RRC signaling. Each group includes eight different rate match patterns. When the network device needs to indicate the PDSCH to avoid a reserved resource indicated by a rate match pattern group, the network device may explicitly indicate, by using the DCI, the rate match pattern group that needs to be avoided. For example, the DCI includes a 2-bit rate matching indicator field, and the rate matching indicator field indicates rate match pattern groups avoided by all PDSCHs scheduled by using the DCI. '00' indicates that the PDSCH scheduled by using the DCI does not need to avoid any rate match pattern group, '10' indicates that the PDSCH scheduled by using the DCI avoides a rate match pattern group 1, '01' indicates that the PDSCH scheduled by using the DCI avoides a rate match pattern group 2, and '11' indicates that the PDSCH scheduled by using the DCI avoides a reserved resource of a union set of the rate match pattern group 1 and the rate match pattern group 2. For example, when the rate match group 1 is shown in FIG. 6, and a rate matching indicator field in the DCI format 1_1 indicates '01', a PDSCH indicated by the DCI does not cover the rate match pattern group 1. In other words, the PDSCH is not mapped to a resource area filled with the slashes.

When the manner is extended to scheduling the plurality of PDSCHs by using the single piece of DCI, the rate matching indicator field takes effect on all PDSCHs indicated by the rate matching indicator field. An example in which the rate match pattern group 1 is shown in FIG. 6 is still used. One piece of DCI is used to schedule six PDSCHs, and a rate matching indicator field of the DCI is '01'. In other words, the six PDSCHs need to avoid resources shown on the right side of FIG. 6.

FIG. 7 shows a scenario in which one piece of DCI is used to schedule a plurality of PDSCHs. In FIG. 7, the terminal device receives the piece of DCI, and the DCI is used to schedule six PDSCHs, as shown in thick solid line boxes. To increase capacity of the PDSCH, a time-frequency resource configured for each PDSCH occupies an entire slot, for example, 14 symbols and 275 RBs. However, to prevent the PDSCH from affecting another terminal device (for example, UE 2 and UE 3 in FIG. 7), DCI of a terminal device 1 (for example, UE 1 in FIG. 7) indicates a rate match pattern group. Because the rate match pattern group indicated by the DCI needs to take effect on all PDSCHs scheduled by using the DCI, statuses of all terminal devices need to be considered in the rate match pattern in the group. Consequently, a resource waste is inevitable.

When one piece of DCI is used to schedule a plurality of PDSCHs, if a rate matching indicator field in the DCI is not extended, all PDSCHs indicated by the DCI use a same rate match pattern group. In this case, to ensure that the PDSCH does not conflict with a PDCCH, the rate match pattern group indicated by the DCI needs to cover all areas in which time-frequency resource multiplexing of the PDCCH and the PDSCH may overlap (overlap), and there is no PDCCH or CORESET in a time unit (for example, a slot) in which the PDSCH is located. The PDSCH also avoids using a time-frequency resource of the rate match pattern group, leading to a resource waste and a decrease in system capacity.

In view of this, an embodiment of this application provides a communication method. The method may be applied to the communication system in FIG. 1. In this embodiment of this application, a transmit end device is described as a first device, and a receive end device is described as a second device. A unified description is provided herein. Details are not described below again.

In the communication method provided in this embodiment of this application, the first device sends control information and L physical shared channels to the second device. The control information indicates the L physical shared channels and L first resources. An i^{th} first resource in the L first resources is a time-frequency resource allocated to an i^{th} physical shared channel in the L physical shared channels. The control information includes a first field, the first field includes G bits, the G bits indicate L rate match pattern groups, the G bits include a plurality of bit groups, each of the plurality of bit groups indicates rate match pattern groups for a maximum of M physical shared channels, the M physical shared channels are a part of the L physical shared channels, and the rate match pattern groups indicated by each of the plurality of bit groups are a part of the L rate match pattern groups. M is a positive integer less than L, and G is a positive integer greater than or equal to 2. An i^{th} rate match pattern group in the L rate match pattern groups indicates an i^{th} second resource, and the i^{th} second resource is a time-frequency resource that is indicated by the control information and that cannot be occupied by the i^{th} physical shared channel. The i^{th} physical shared channel in the L physical shared channels occupies an i^{th} third resource. When the i^{th} second resource exists and the i^{th} second resource overlaps the i^{th} first resource, the i^{th} third resource is a resource other than an overlapping resource in the i^{th} first resource, and the overlapping resource is an overlapping resource between the i^{th} second resource and the i^{th} first resource. Alternatively, when the i^{th} second resource does not exist, the i^{th} third resource is the i^{th} first resource. L is a positive integer greater than 1, and i is any positive integer less than or equal to L. In other words, the control information indicates rate match pattern groups for different physical shared channels by using different bits, to avoid a case in which a rate match pattern group indicated by the first field is applicable to all the physical shared channels scheduled by using the control information. In other words, the rate match pattern groups indicated by the different bits in the first field are applicable to different physical shared channels, thereby improving flexibility of indicating the rate match pattern group by using the control information. In this way, when resources occupied by another terminal device in a time unit in which two physical shared channels are located are different, the control information may indicate different rate match pattern groups for the two physical shared channels, so that the two physical shared channels avoid the different resources. This increases physical shared channel capacity and reduces a time-frequency resource waste.

It should be understood that, in the following embodiments of this application, a name of a message between devices or a name or the like of each parameter in the message is merely an example, and may alternatively be another name in a specific implementation. This is not specifically limited in embodiments of this application.

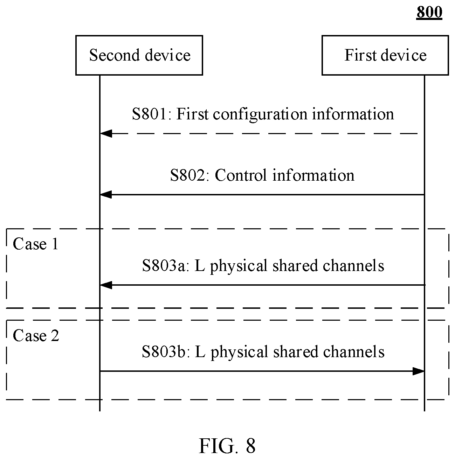

With reference to FIG. 8 to FIG. 16, the following describes in detail the communication method provided in embodiments of this application. A communication method 800 provided in an embodiment of this application includes the following steps.

S801: A first device sends first configuration information to a second device. Correspondingly, the second device receives the first configuration information from the first device.

The first configuration information is used to configure P rate match pattern groups, and P is a positive integer greater than 1.

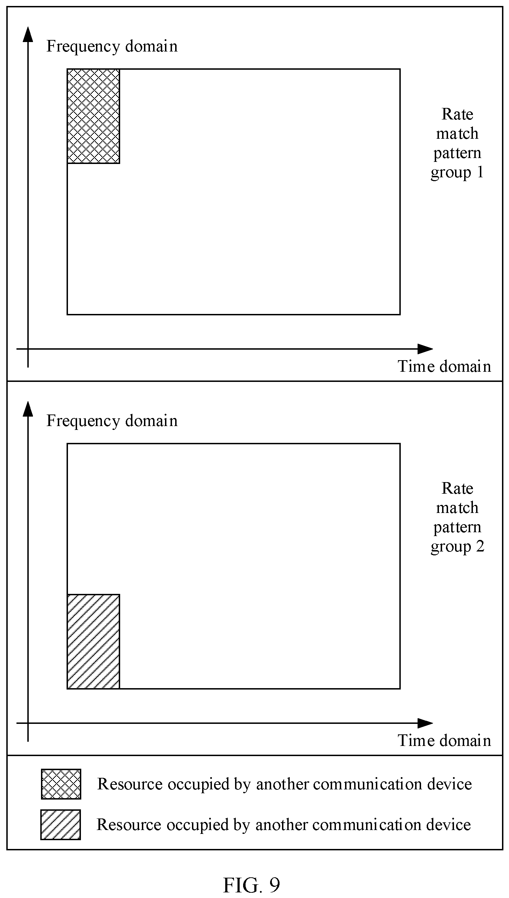

For example, P=2. As shown in FIG. 9, the P rate match pattern groups configured by using the first configuration information may be denoted as a rate match pattern group 1 and a rate match pattern group 2.

For example, in downlink transmission, the first configuration information may be a PDSCH-config IE in RRC signaling. In uplink transmission, the first configuration information may be PUSCH-config information in the RRC signaling. For a configuration process of the P rate match pattern groups, refer to the descriptions in FIG. 5 or FIG. 6. Details are not described herein again.

It should be understood that, with evolution of communication technologies, P may have another value, for example, P=3. In this embodiment of this application, P=2 is used as an example for description, and this should not be construed as a limitation on embodiments of this application.

For the first device, after performing S801, the first device further performs S802.

S802: The first device sends control information to the second device. Correspondingly, the second device receives the control information from the first device.

The control information indicates the following three items.

First item: L physical shared channels L is a positive integer greater than 1. For example, the physical shared channel is described as follows: In downlink transmission, the physical shared channel may be a PDSCH. In uplink transmission, the physical shared channel may be a PUSCH. In the foregoing two cases (downlink transmission and uplink transmission), the control information may be DCI. Correspondingly, the first device is a network device, and the second device is a terminal device. In sidelink transmission, the physical shared channel may be a physical sidelink shared channel (physical sidelink shared channel, PSSCH). Correspondingly, the control information may be sidelink control information (sidelink control information, SCI). The first device is a terminal device at a transmit end, for example, a terminal device 1, and the second device is a terminal device at a receive end, for example, a terminal device 2.

It is easily understood that L indicates a quantity of physical shared channels actually scheduled by using the control information. For example, L may be determined based on a quantity of columns of PDSCH mapping types (or S, or L, or K₀) in Table 2. Table 2 is used as an example. When a row index is 1, a row includes three groups of PDSCH mapping types, three groups of S, three groups of L, and three groups of K₀, to respectively indicate time domain resources of three PDSCHs. When a row index is 2, a row includes five groups of PDSCH mapping types, five groups of S, five groups of L, and five groups of K₀, to respectively indicate time domain resources of five PDSCHs (not shown in Table 2). When a TDRA field in the DCI indicates '0000', the DCI indicates a PDSCH resource whose row index is 1, that is, the DCI is used to schedule three PDSCHs. In this case, L=3.

**Table 2**

| Row index | PDSCH mapping type | K₀ | S | L | PDSCH mapping type | K₀ | S | L | PDSCH mapping type | K₀ | S | L |
|---|---|---|---|---|---|---|---|---|---|---|---|---|
| 1 | Type A | *x*₁ | *y*₁ | *z*₁ | Type A | *x*₂ | *y*₂ | *z*₂ | Type A | *x*₃ | *y*₃ | *z*₃ |
| ... | | | | | | | | | | | | |

It is easily understood that in Table 2, the parameters *x*₁,*x*₂,*x*₃,*y*₁,*y*₂,*y*₃,*z*₁,*y*₂,*y*₃ are integers. When the physical shared channel is the PUSCH, K₀ in Table 2 may be replaced with K₂ in a unit of slot, indicating a time offset of the PDSCH relative to the corresponding DCI.

Second item: L first resources, where L is a positive integer greater than 1. For example, the first resource is described as follows: An i^{th} first resource in the L first resources is a time-frequency resource allocated to an i^{th} physical shared channel in the L physical shared channels, where i is any positive integer less than or equal to L. When the control information is the DCI, the DCI includes the TDRA field and an FDRA field. A resource of the first resource in time domain may include a time domain resource indicated by the TDRA field, and a resource of the first resource in frequency domain may include a frequency domain resource indicated by the FDRA field.

Third item: L rate match pattern groups, where L is a positive integer greater than 1.

An i^{th} rate match pattern group in the L rate match pattern groups indicates an i^{th} second resource, and the i^{th} second resource is a time-frequency resource that is indicated by the control information and that cannot be occupied by the i^{th} physical shared channel, where i is any positive integer less than or equal to L.

It is easily understood that when the first device performs S801, any one of the L rate match pattern groups is at most one of the P rate match pattern groups. The at most one may be understood as that when the i^{th} rate match pattern group in the L rate match pattern groups is not null, the rate match pattern group is one of the P rate match pattern groups. On the contrary, when the i^{th} rate match pattern group in the L rate match pattern groups is null, the rate match pattern group does not exist.

In this embodiment of this application, that the i^{th} rate match pattern group in the L rate match pattern groups is not null, that the i^{th} rate match pattern group exists, and that the i^{th} second resource exists express a same meaning, and that the i^{th} rate match pattern group in the L rate match pattern groups is not null, that the i^{th} rate match pattern group exists, and that the i^{th} second resource exists may be replaced with each other. Similarly, that the i^{th} rate match pattern group in the L rate match pattern groups is null, that the i^{th} rate match pattern group does not exist, and that the i^{th} second resource does not exist express a same meaning, and that the i^{th} rate match pattern group in the L rate match pattern groups is null, that the i^{th} rate match pattern group does not exist, and that the i^{th} second resource does not exist may be replaced with each other. A unified description is provided herein. Details are not described below again.

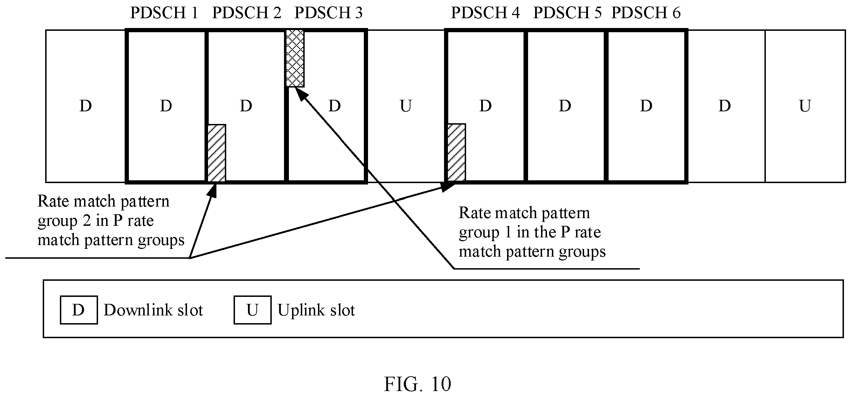

For example, with reference to FIG. 10, when L=6 and P=2, a 1^{st} rate match pattern group in the L rate match pattern groups is a rate match pattern group corresponding to a PDSCH 1, and the rate match pattern group is null. A 2^{nd} rate match pattern group in the L rate match pattern groups is a rate match pattern group corresponding to a PDSCH 2, and the rate match pattern group is not null, and corresponds to the rate match pattern group 2 in the P rate match pattern groups. A 3^{rd} rate match pattern group in the L rate match pattern groups is a rate match pattern group corresponding to a PDSCH 3, and the rate match pattern group is not null, and corresponds to the rate match pattern group 1 in the P rate match pattern groups. A 4^{th} rate match pattern group in the L rate match pattern groups is a rate match pattern group corresponding to a PDSCH 4, and the rate match pattern group is not null, and corresponds to the rate match pattern group 2 in the P rate match pattern groups. A 5^{th} rate match pattern group in the L rate match pattern groups is a rate match pattern group corresponding to a PDSCH 5, and the rate match pattern group is null. A 6^{th} rate match pattern group in the L rate match pattern groups is a rate match pattern group corresponding to a PDSCH 6, and the rate match pattern group is null.

The control information includes a first field. The first field includes G bits, and the G bits indicate the L rate match pattern groups. Specifically, the G bits include a plurality of bit groups, and each of the plurality of bit groups indicates rate match pattern groups for a maximum of M physical shared channels. The M physical shared channels are a part of the L physical shared channels, and the rate match pattern groups indicated by each of the plurality of bit groups are a part of the L rate match pattern groups. M is a positive integer less than L, and G is a positive integer greater than or equal to 2. Each of the plurality of bit groups includes one or more of the G bits.

For example, the control information is the DCI, the first field is a rate matching indicator field, and G indicates a size (bit width) of the rate matching indicator field.

It is easily understood that in this embodiment of this application, the bit group may alternatively be replaced with another description, for example, a bit set or a bit segment. The following uses the bit group as an example for description, and should not be construed as a limitation on embodiments of this application.

The following describes the bit group in four manners (following Manner 1 to Manner 4).

Before the four manners (following Manner 1 to Manner 4) are described, two cases (following Case A and Case B) are first described:
Case A: Calculation starts from an MSB to an LSB in the G bits, that is, calculation starts from a leftmost bit to a rightmost bit in the G bits. In this case, a 1^{st} bit in the G bits is the leftmost bit in the G bits, namely, the MSB; and a G^{th} bit in the G bits is the rightmost bit in the G bits, namely, the LSB.
Case B: Calculation starts from an LSB to an MSB in the G bits, that is, calculation starts from a rightmost bit to a leftmost bit in the G bits. In this case, a 1^{st} bit in the G bits is the rightmost bit in the G bits, namely, the LSB; and a G^{th} bit in the G bits is the leftmost bit in the G bits, namely, the MSB.

The four manners (following Manner 1 to Manner 4) are further described.

Manner 1: Each of the plurality of bit groups includes at least two adjacent bits in the G bits, and the M physical shared channels corresponding to each bit group are one of the L physical shared channels, that is, M=1. It may be understood that each of the plurality of bit groups indicates the rate match pattern group for one physical shared channel.

In the following, any one of the plurality of bit groups is denoted as a first bit group. The first bit group is used as an example for description.

When the first bit group includes a (2*g-1)^{th} bit and a (2*g)^{th} bit in the G bits, or the first bit group includes a (2*(X-L+g)-1)^{th} bit and a (2*(X-L+g))^{th} bit in the G bits, the M physical shared channels corresponding to the first bit group are a g^{th} physical shared channel in the L physical shared channels. G is a positive integer greater than or equal to 2L, g is any positive integer less than or equal to L, and X indicates a maximum quantity of physical shared channels that can be scheduled by using the control information.

In Case A of Manner 1, that the calculation starts from the MSB to the LSB in the G bits is used as an example:
The (2*g-1)^{th} bit in the G bits is a (2*g-1)^{th} bit obtained through calculation starting from the MSB to the LSB in the G bits. The (2*g)^{th} bit in the G bits is a (2*g)^{th} bit obtained through calculation starting from the MSB to the LSB in the G bits. The (2*(X-L+g)-1)^{th} bit in the G bits is a (2*(X-L+g)-1)^{th} bit obtained through calculation starting from the MSB to the LSB in the G bits. The (2*(X-L+g))^{th} bit in the G bits is a (2*(X-L+g))^{th} bit obtained through calculation starting from the MSB to the LSB in the G bits.

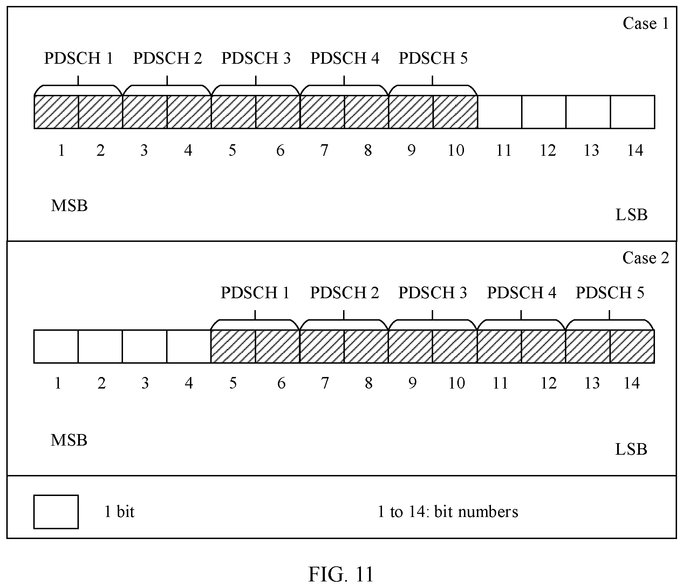

For example, FIG. 11 is used as an example, and G=14. In other words, the first field includes 14 bits, and the bits are numbered from 1 to 14. In the 14 bits, the MSB is a bit numbered 1, and the LSB is a bit numbered 14.

In a box in which "Case 1" in FIG. 11 is located, first two bits (namely, a 1^{st} bit and a 2^{nd} bit, or a bit numbered 1 and a bit numbered 2) obtained through calculation starting from the MSB to the LSB in the 14 bits indicate a rate match pattern group of a 1^{st} physical shared channel (for example, denoted as the PDSCH 1) scheduled by using the control information. A 3^{rd} bit and a 4^{th} bit (or described as a bit numbered 3 and a bit numbered 4) obtained through calculation starting from the MSB to the LSB in the 14 bits indicate a rate match pattern group of a 2^{nd} physical shared channel (for example, denoted as the PDSCH 2) scheduled by using the control information. Other bits may be deduced by analogy. Details are not described again. It is easily understood that when a quantity of physical shared channels actually indicated by the control information is less than 7, for example, if the control information indicates five physical shared channels at a time, that is, L=5, 10 bits in the rate matching indicator field are actually valid, as shown in boxes filled with slashes in FIG. 11. The 10 bits are counted from the MSB, and an 11^{th} bit to a 14^{th} bit (or described as bits numbered 11 to 14) obtained through calculation starting from the MSB are ignored by the second device, that is, do not indicate a rate match pattern group of any physical shared channel.

In a box in which "Case 2" in FIG. 11 is located, a 5^{th} bit and a 6^{th} bit (or described as a bit numbered 5 and a bit numbered 6) in the 14 bits indicate a rate match pattern group of a 1^{st} physical shared channel (for example, denoted as the PDSCH 1) scheduled by using the control information. A 7^{th} bit and an 8^{th} bit (or described as a bit numbered 7 and a bit numbered 8) in the 14 bits indicate a rate match pattern group of a 2^{nd} physical shared channel (for example, denoted as the PDSCH 2) scheduled by using the control information. Other bits may be deduced by analogy. Details are not described again. It is easily understood that when a quantity of physical shared channels actually indicated by the control information is less than 7, for example, if the control information indicates five physical shared channels at a time, that is, L=5, 10 bits in the rate matching indicator field are actually valid, as shown in boxes filled with slashes in FIG. 11. Bits numbered 1 to 4 in the 10 bits are ignored by the second device, that is, do not indicate a rate match pattern group of any physical shared channel.

In Case B of Manner 1, that the calculation starts from the LSB to the MSB in the G bits is used as an example:
The (2*g-1)^{th} bit in the G bits is a (2*g-1)^{th} bit obtained through calculation starting from the LSB to the MSB in the G bits. The (2*g)^{th} bit in the G bits is a (2*g)^{th} bit obtained through calculation starting from the LSB to the MSB in the G bits. The (2*(X-L+g)-1)^{th} bit in the G bits is a (2*(X-L+g)-1)^{th} bit obtained through calculation starting from the LSB to the MSB in the G bits. The (2*(X-L+g))^{th} bit in the G bits is a (2*(X-L+g))^{th} bit obtained through calculation starting from the LSB to the MSB in the G bits.

For example, every 2 bits in G bits start to sequentially indicate a rate match pattern group of a different physical shared channel. For example, G=14, and first two bits (namely, a 1^{st} bit and a 2^{nd} bit) obtained through calculation starting from the LSB to the MSB in the 14 bits indicate a rate match pattern group of a 1^{st} physical shared channel (for example, denoted as the PDSCH 1) scheduled by using the control information. A 3^{rd} bit and a 4^{th} bit obtained through calculation starting from the LSB to the MSB in the 14 bits indicate a rate match pattern group of a 2^{nd} physical shared channel (for example, denoted as the PDSCH 2) scheduled by using the control information. Other bits may be deduced by analogy. Details are not described again. It is easily understood that when a quantity of physical shared channels actually indicated by the control information is less than 7, for example, if the control information indicates five physical shared channels at a time, that is, L=5, 10 bits in the rate matching indicator field are actually valid. The 10 bits are counted from the LSB, and an 11^{th} bit to a 14^{th} bit obtained through calculation starting from the LSB are ignored by the second device, that is, do not indicate a rate match pattern group of any physical shared channel.

For another example, G=14, and a 5^{th} bit and a 6^{th} bit obtained through calculation starting from the LSB to the MSB in the 14 bits indicate a rate match pattern group of a 1^{st} physical shared channel scheduled by using the control information. A 7^{th} bit and an 8^{th} bit obtained through calculation starting from the LSB to the MSB in the 14 bits indicate a rate match pattern group of a 2^{nd} physical shared channel scheduled by using the control information. Other bits may be deduced by analogy. Details are not described again. It is easily understood that when a quantity of physical shared channels actually indicated by the control information is less than 7, for example, if the control information indicates five physical shared channels at a time, that is, L=5, 10 bits in the rate matching indicator field are actually valid. The 10 bits are counted from the LSB, and a 1^{st} bit to a 4^{th} bit obtained through calculation starting from the LSB are ignored by the second device, that is, do not indicate a rate match pattern group of any physical shared channel.

In other words, in Manner 1, each bit group in the first field indicates the rate match pattern group for one physical shared channel, so that the control information flexibly indicates different rate match pattern groups for the different physical shared channels.

Optionally, in this embodiment of this application, the parameter X is described as follows: X indicates the maximum quantity of physical shared channels that can be scheduled by using the control information. In some embodiments, X indicates a maximum quantity of physical shared channels that can be actually scheduled by using the control information. For example, the quantity of physical shared channels scheduled by using the control information is determined based on the quantity of columns of the PDSCH mapping type (or S, or L, or K₀) in Table 1. Table 1 is used as an example. Table 1 includes the 16 row indexes, and a maximum quantity of PDSCHs indicated by any one of these row indexes is 7. Correspondingly, X=7. In some other embodiments, X indicates a maximum quantity of physical shared channels that can be configured by using the control information. For example, it is specified in a related technology that a maximum of eight physical shared channels are scheduled by using the control information (for example, the DCI). Correspondingly, X=8. In this case, even if the maximum quantity of PDSCHs indicated by the row index in Table 1 is 7, X is still set to 8. It should be understood that X does not indicate a quantity of physical shared channels actually indicated by the control information.

Optionally, in Manner 1, the parameter G is described as follows: G=2X. X indicates the maximum quantity of physical shared channels that can be scheduled by using the control information. In this way, the first field may indicate a rate match pattern group of each physical shared channel that can be scheduled by using the control information. It should be understood that in Manner 1, G may be any positive integer greater than or equal to 2X. G=2X is used as an example for description, and this should not be understood as a limitation on embodiments of this application.

Optionally, in Manner 1, for example, the first bit group includes the (2*g-1)^{th} bit and the (2*g)^{th} bit in the G bits, and the first bit group may indicate the following four cases (following Case 1 to Case 4):
Case 1: When the (2*g-1)^{th} bit in the G bits is of a first value, and the (2*g)^{th} bit is of the first value, a rate match pattern group indicated by the first bit group does not exist.

For example, the first value is 0. In other words, when the (2*g-1)^{th} bit in the G bits is 0, and the (2*g)^{th} bit is 0, the rate match pattern group indicated by the first bit group does not exist. That the rate match pattern group indicated by the first bit group does not exist may also be understood as that the rate match pattern group indicated by the first bit group is null, and correspondingly, a second resource corresponding to the rate match pattern group indicated by the first bit group does not exist. No resource reservation area needs to be removed from an actual transmission resource of the physical shared channel corresponding to the first bit group.

Case 2: When the (2*g-1)^{th} bit in the G bits is of a second value, and the (2*g)^{th} bit is of a first value, a rate match pattern group indicated by the first bit group is a first rate match pattern group. The first rate match pattern group is one of the P rate match pattern groups, for example, a rate match pattern group 1. For the P rate match pattern groups, refer to the description in S801. Details are not described herein again.

For example, the first value is 0, and the second value is 1. In other words, when the (2*g-1)^{th} bit in the G bits is 1, and the (2*g)^{th} bit is 0, the rate match pattern group indicated by the first bit group is the first rate match pattern group. A resource reservation area of the first rate match pattern group needs to be removed from an actual transmission resource of the physical shared channel corresponding to the first bit group.

Case 3: When the (2*g-1)^{th} bit in the G bits is of a first value, and the (2*g)^{th} bit is of a second value, a rate match pattern group indicated by the first bit group is a second rate match pattern group. The second rate match pattern group is another one of the P rate match pattern groups, for example, a rate match pattern group 2. For the P rate match pattern groups, refer to the description in S801. Details are not described herein again.

For example, the first value is 0, and the second value is 1. In other words, when the (2*g-1)^{th} bit in the G bits is 0, and the (2*g)^{th} bit is 1, the rate match pattern group indicated by the first bit group is the second rate match pattern group. A resource reservation area of the second rate match pattern group needs to be removed from an actual transmission resource of the physical shared channel corresponding to the first bit group.

Case 4: When the (2*g-1)^{th} bit in the G bits is of a second value, and the (2*g)^{th} bit is of the second value, rate match pattern groups indicated by the first bit group are a first rate match pattern group and a second rate match pattern group. The first rate match pattern group is one of the P rate match pattern groups, for example, a rate match pattern group 1, and the second rate match pattern group is another one of the P rate match pattern groups, for example, a rate match pattern group 2. The first rate match pattern group and the second rate match pattern group are different.

For example, the second value is 1. In other words, when the (2*g-1)^{th} bit in the G bits is 1, and the (2*g)^{th} bit is 1, the rate match pattern groups indicated by the first bit group are the first rate match pattern group and the second rate match pattern group. Resource reservation areas of the first rate match pattern group and the second rate match pattern group need to be removed from an actual transmission resource of the physical shared channel corresponding to the first bit group.

It should be understood that, in Case 1 to Case 4 in Manner 1, an example in which the first value is 0 and the second value is 1 is used for description. Certainly, it may alternatively replaced with the first value being 1 and the second value being 0. This is not limited in embodiments of this application. In Case 1 to Case 4, the (2*g-1)^{th} bit in the G bits may be replaced with a (2*(X-L+g)-1)^{th} bit in the G bits. In addition, the (2*g)^{th} bit in the G bits may be replaced with a (2*(X-L+g))^{th} bit in the G bits. In other words, the first bit group includes the (2*(X-L+g)-1)^{th} bit and the (2*(X-L+g))^{th} bit in the G bits. Descriptions of Case 1 to Case 4 in Manner 1 are also applicable. Details are not described herein again.

Manner 2: Each of the plurality of bit groups includes one of the G bits. The M physical shared channels corresponding to each bit group are one of the L physical shared channels, that is, M=1. It may be understood that each of the plurality of bit groups indicates the rate match pattern group for one physical shared channel.

In the following, any one of the plurality of bit groups is denoted as a first bit group. The first bit group is used as an example for description.

When the first bit group includes a g^{th} bit in the G bits, or the first bit group includes a (g+G-L)^{th} bit in the G bits, the M physical shared channels corresponding to the first bit group are a g^{th} physical shared channel in the L physical shared channels. g is the positive integer less than or equal to L.

In Case A of Manner 2, that the calculation starts from the MSB to the LSB in the G bits is used as an example, the g^{th} bit in the G bits is a g^{th} bit obtained through calculation starting from the MSB to the LSB in the G bits. The (g+G-L)^{th} bit in the G bits is a (g+G-L)^{th} bit obtained through calculation starting from the MSB to the LSB in the G bits.

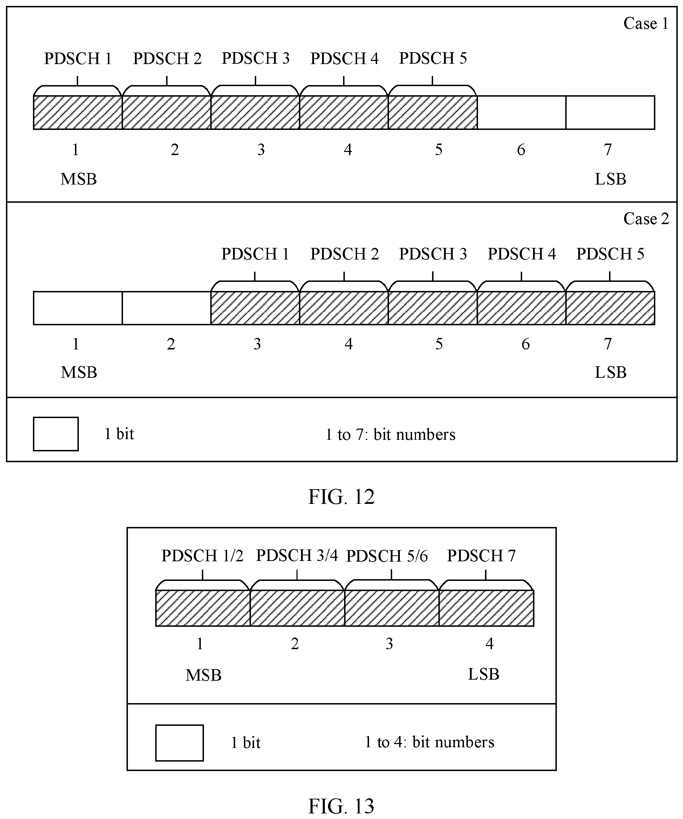

For example, FIG. 12 is used as an example, and G=7. In other words, the first field includes 7 bits, and the bits are numbered from 1 to 7. In the 7 bits, the MSB is a bit numbered 1, and the LSB is a bit numbered 7. A 1^{st} bit (or a bit numbered 1) obtained through calculation starting from the MSB to the LSB in the 7 bits indicates a rate match pattern group of a 1^{st} physical shared channel (for example, denoted as the PDSCH 1) scheduled by using the control information. A 2^{nd} bit (or described as a bit numbered 2) obtained through calculation starting from the MSB to the LSB in the 7 bits indicates a rate match pattern group of a 2^{nd} physical shared channel (for example, denoted as the PDSCH 2) scheduled by using the control information. Other bits may be deduced by analogy. Details are not described again. It is easily understood that when a quantity of physical shared channels actually indicated by the control information is less than 7, for example, if the control information indicates five physical shared channels at a time, that is, L=5, 5 bits in the rate matching indicator field are actually valid, as shown in boxes filled with slashes in FIG. 12. The 5 bits are counted from the MSB, and a 6^{th} bit and a 7^{th} bit (or described as bits numbered 6 and 7) obtained through calculation starting from the MSB are ignored by the second device, that is, do not indicate a rate match pattern group for any physical shared channel.

Alternatively, FIG. 12 is still used as an example. A 3^{rd} bit (or described as a bit numbered 3) in the 7 bits indicates a rate match pattern group of a 1^{st} physical shared channel (for example, denoted as the PDSCH 1) scheduled by using the control information. A 4^{th} bit (or described as a bit numbered 4) in the 7 bits indicates a rate match pattern group of a 2^{nd} physical shared channel (for example, denoted as the PDSCH 2) scheduled by using the control information. Other bits may be deduced by analogy. Details are not described again. It is easily understood that when a quantity of physical shared channels actually indicated by the control information is less than 7, for example, if the control information indicates five physical shared channels at a time, that is, L=5, 5 bits in the rate matching indicator field are actually valid, as shown in boxes filled with slashes in FIG. 12. Bits numbered 1 and 2 are ignored by the second device, that is, do not indicate a rate match pattern group for any PDSCH.

In Case B of Manner 2, that the calculation starts from the LSB to the MSB in the G bits is used as an example, the g^{th} bit in the G bits is a g^{th} bit obtained through calculation starting from the LSB to the MSB in the G bits. The (g+G-L)^{th} bit in the G bits is a (g+G-L)^{th} bit obtained through calculation starting from the LSB to the MSB in the G bits.

For example, every 1 bit in G bits starts to sequentially indicate a rate match pattern group of a different physical shared channel. For example, G=7, and a 1^{st} bit obtained through calculation starting from the LSB to the MSB in the 7 bits indicates a rate match pattern group of a 1^{st} physical shared channel (for example, denoted as the PDSCH 1) scheduled by using the control information. A 2^{nd} bit obtained through calculation starting from the LSB to the MSB in the 7 bits indicates a rate match pattern group of a 2^{nd} physical shared channel (for example, denoted as the PDSCH 2) scheduled by using the control information. Other bits may be deduced by analogy. Details are not described again. It is easily understood that when a quantity of physical shared channels actually indicated by the control information is less than 7, for example, if the control information indicates five physical shared channels at a time, that is, L=5, 5 bits in the rate matching indicator field are actually valid. The 5 bits are counted from the LSB, and a 6^{th} bit and a 7^{th} bit obtained through calculation starting from the LSB are ignored by the second device, that is, do not indicate a rate match pattern group of any physical shared channel.

For another example, G=7, and a 3^{rd} bit obtained through calculation starting from the LSB to the MSB in the 7 bits indicates a rate match pattern group of a 1^{st} physical shared channel scheduled by using the control information. A 4^{th} bit obtained through calculation starting from the LSB to the MSB in the 7 bits indicates a rate match pattern group of a 2^{nd} physical shared channel scheduled by using the control information. Other bits may be deduced by analogy. Details are not described again. It is easily understood that when a quantity of physical shared channels actually indicated by the control information is less than 7, for example, if the control information indicates five physical shared channels at a time, that is, L=5, 5 bits in the rate matching indicator field are actually valid. The 5 bits are counted from the LSB, and a 1^{st} bit and a 2^{nd} bit obtained through calculation starting from the LSB are ignored by the second device, that is, do not indicate a rate match pattern group of any physical shared channel.

In other words, in Manner 2, each bit group (or described as each bit) in the first field indicates the rate match pattern group for the physical shared channel, so that the control information can flexibly indicate the rate match pattern groups for the different physical shared channels.

Optionally, in Manner 2, the parameter G is described as follows: G=X. X indicates the maximum quantity of physical shared channels that can be scheduled by using the control information. In this way, the G bits in the first field may indicate each physical shared channel that can be scheduled by using the control information. It should be understood that in Manner 2, G may be any positive integer greater than or equal to X. G=X is used as an example for description, and this should not be understood as a limitation on embodiments of this application.

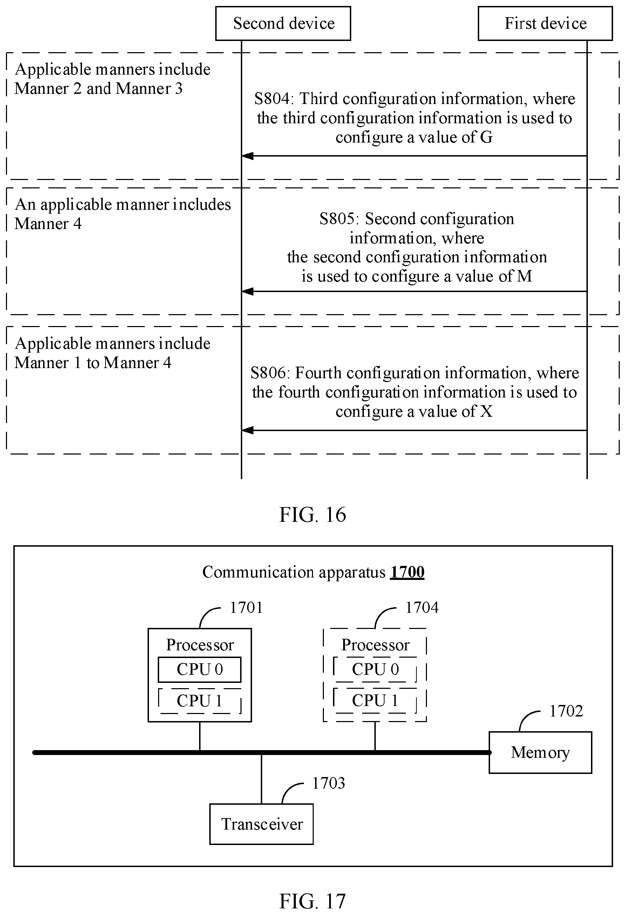

Optionally, in Manner 2, a value of G may alternatively be configured by the first device. For example, refer to FIG. 16. Before performing S802, the first device further performs S804.

S804: The first device sends third configuration information to the second device. Correspondingly, the second device receives the third configuration information from the first device.

The third configuration information is used to configure the value of G. For example, the third configuration information may be carried in the RRC signaling, so that the second device learns of the value of G.

Optionally, in Manner 2, the first bit group is used as an example, and the first bit group includes the g^{th} bit in the G bits. In a possible implementation, the first bit group indicates the following two cases (following Case 1 and Case 2):
Case 1: When the g^{th} bit in the G bits is of the first value, the rate match pattern group indicated by the first bit group does not exist.
Case 2: When the g^{th} bit in the G bits is of the second value, the rate match pattern group indicated by the first bit group is the one of the P rate match pattern groups, for example, the rate match pattern group 1 or the rate match pattern group 2. For the P rate match pattern groups, refer to the description in S801. Details are not described herein again.

For example, the first value is 0 and the second value is 1.

When the g^{th} bit in the G bits is 0, the rate match pattern group indicated by the first bit group does not exist. It may be understood that no resource reservation area needs to be removed from the actual transmission resource of the physical shared channel corresponding to the first bit group.

When the g^{th} bit in the G bits is 1, the rate match pattern group indicated by the first bit group is the rate match pattern group 1. It may be understood that a resource reservation area of the rate match pattern group 1 needs to be removed from the actual transmission resource of the physical shared channel corresponding to the first bit group. Alternatively, when the g^{th} bit in the G bits is 1, the rate match pattern group indicated by the first bit group is the rate match pattern group 2. It may be understood that a resource reservation area of the rate match pattern group 2 needs to be removed from the actual transmission resource of the physical shared channel corresponding to the first bit group.

For another example, the first value is 1 and the second value is 0.

When the g^{th} bit in the G bits is 1, the rate match pattern group indicated by the first bit group does not exist. It may be understood that no resource reservation area needs to be removed from the actual transmission resource of the physical shared channel corresponding to the first bit group.

When the g^{th} bit in the G bits is 0, the rate match pattern group indicated by the first bit group is the rate match pattern group 1. It may be understood that a resource reservation area of the rate match pattern group 1 needs to be removed from the actual transmission resource of the physical shared channel corresponding to the first bit group. Alternatively, when the g^{th} bit in the G bits is 0, the rate match pattern group indicated by the first bit group is the rate match pattern group 2. It may be understood that a resource reservation area of the rate match pattern group 2 needs to be removed from the actual transmission resource of the physical shared channel corresponding to the first bit group.

Optionally, in Manner 2, the first bit group is used as an example, and the first bit group includes the g^{th} bit in the G bits. In another possible implementation, the first bit group indicates the following two cases (following Case 3 and Case 4):
Case 3: When the g^{th} bit in the G bits is of the first value, the rate match pattern group indicated by the first bit group is the first rate match pattern group. The first rate match pattern group is the one of the P rate match pattern groups, for example, the rate match pattern group 1. For the P rate match pattern groups, refer to the description in S801. Details are not described herein again.
Case 4: When the g^{th} bit in the G bits is of the second value, the rate match pattern group indicated by the first bit group is the second rate match pattern group. The second rate match pattern group is the another one of the P rate match pattern groups, for example, the rate match pattern group 2.

For example, the first value is 0 and the second value is 1.

When the g^{th} bit in the G bits is 0, the rate match pattern group indicated by the first bit group is the rate match pattern group 1. It may be understood that a resource reservation area of the rate match pattern group 1 needs to be removed from the actual transmission resource of the physical shared channel corresponding to the first bit group.

When the g^{th} bit in the G bits is 1, the rate match pattern group indicated by the first bit group is the rate match pattern group 2. It may be understood that a resource reservation area of the rate match pattern group 2 needs to be removed from the actual transmission resource of the physical shared channel corresponding to the first bit group.

For another example, the first value is 1 and the second value is 0.

When the g^{th} bit in the G bits is 1, the rate match pattern group indicated by the first bit group is the rate match pattern group 1. It may be understood that a resource reservation area of the rate match pattern group 1 needs to be removed from the actual transmission resource of the physical shared channel corresponding to the first bit group.

When the g^{th} bit in the G bits is 0, the rate match pattern group indicated by the first bit group is the rate match pattern group 2. It may be understood that a resource reservation area of the rate match pattern group 2 needs to be removed from the actual transmission resource of the physical shared channel corresponding to the first bit group.

It should be understood that, in Case 1 to Case 4 in Manner 2, the g^{th} bit in the G bits may be replaced with the (g+G-L)^{th} bit in the G bits. In other words, the first bit group includes the (g+G-L)^{th} bit in the G bits. Descriptions of Case 1 to Case 4 in Manner 2 are also applicable. Details are not described herein again.

In other words, in Manner 2, each bit group (or described as each bit) in the first field indicates the rate match pattern group for the physical shared channel. This can flexibly indicate the rate match pattern groups for the different physical shared channels to some extent, and can reduce signaling overheads.

Manner 3: Each of the plurality of bit groups includes one of the G bits. A value G of the first field is a fixed value. Each bit group corresponds to the maximum of M physical shared channels in the L physical shared channels, where M>1, and M<L. It may be understood that each of the plurality of bit groups indicates the rate match pattern groups for the maximum of M physical shared channels.

In some embodiments of Manner 3, the parameter G is described as follows: A value of G is a default value. For example, when the physical shared channel is the PDSCH, G=K by default, for example, K=8. Alternatively, the value of G depends on X. For example, when X>2 and X<=4, G=2; when X>4 and X<=6, G=3; and when X>6, G=4. X indicates the maximum quantity of physical shared channels that can be scheduled by using the control information. For details, refer to the description in Manner 1. Alternatively, G=X, or the value of G is configured by the first device. For details, refer to the description in Manner 2. Details are not described herein again.

In the following, any one of the plurality of bit groups is denoted as a first bit group. The first bit group is used as an example for description.

The following parameters are defined:
Parameter 1: N=min(G, L), where N indicates a quantity of bits that are in the G bits and that actually indicate the rate match pattern group, and min(·) indicates a minimum operator. For example, when G>L, N=L; when G=L, N=L; or when G<L, N=G.
Parameter 2: N₁ is a remainder of L/N, where / indicates a division operator. For example, when N=L, N₁=0; or when N=G, N₁ is a positive integer.
Parameter 3: V₁=ceil(L/N), where ceil(·) indicates a round-up operator.
Parameter 4: V₂=floor(L/N), where floor(·) indicates a round-down operator.

A case in which N₁ is the positive integer is further described:
In some embodiments, when g is any positive integer less than or equal to N₁, and when the first bit group includes the g^{th} bit in the G bits, the M physical shared channels corresponding to the first bit group are ((g-1)*V₁+1)^{th} to (g*V₁)^{th} physical shared channels in the L physical shared channels. In other words, for first N₁ bits in the G bits, each of the first N₁ bits indicates rate match pattern groups for V₁ physical shared channels. In addition, different bits in the first N₁ bits correspond to different physical shared channels.

When g is any positive integer greater than N₁ and less than or equal to N, and when the first bit group includes the g^{th} bit in the G bits, the M physical shared channels corresponding to the first bit group are (N₁*V₁+(g-N₁-1)*V₂+1)^{th} to (N₁*V₁+(g-N₁-1)*V₂+V₂)^{th} physical shared channels in the L physical shared channels. In other words, each bit after an N₁^{th} bit in the G bits indicates rate match pattern groups for V₂ physical shared channels.

In Case A of Manner 3, that the calculation starts from the MSB to the LSB in the G bits is used as an example, the g^{th} bit in the G bits is a g^{th} bit obtained through calculation starting from the MSB to the LSB in the G bits.

For example, refer to FIG. 13. G=4, L=7, and N=4 are used as an example. N₁ is a remainder of 7/4, that is, N₁=3, V₁=ceil(7/4)=2, and V₂=floor(7/4)=1. Correspondingly, a 1^{st} bit (for example, a bit numbered 1 in FIG. 13) obtained through calculation starting from the MSB to the LSB in the rate matching indicator field indicates a rate match pattern group of a 1^{st} PDSCH and a rate match pattern group of a 2^{nd} PDSCH (denoted as a PDSCH 1 and a PDSCH 2 in FIG. 13). A 2^{nd} bit (for example, a bit numbered 2 in FIG. 13) obtained through calculation starting from the MSB to the LSB in the rate matching indicator field indicates a rate match pattern group of a 3^{rd} PDSCH and a rate match pattern group of a 4^{th} PDSCH (denoted as a PDSCH 3 and a PDSCH 4 in FIG. 13). A 3^{rd} bit (for example, a bit numbered 3 in FIG. 13) obtained through calculation starting from the MSB to the LSB in the rate matching indicator field indicates a rate match pattern group of a 5^{th} PDSCH and a rate match pattern group of a 6^{th} PDSCH (denoted as a PDSCH 5 and a PDSCH 6 in FIG. 13). A 4^{th} bit (for example, a bit numbered 4 in FIG. 13) obtained through calculation starting from the MSB to the LSB in the rate matching indicator field indicates a rate match pattern group of a 7^{th} PDSCH (denoted as a PDSCH 7 in FIG. 13).

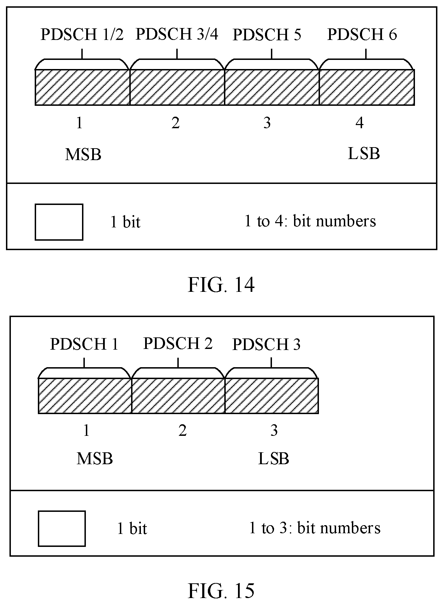

For another example, refer to FIG. 14. G=4, L=6, and N=4 are used as an example. N₁ is a remainder of 6/4, that is, N₁=2, V₁=ceil(6/4)=2, and V₂=floor(6/4)=1. Correspondingly, a 1^{st} bit (for example, a bit numbered 1 in FIG. 14) obtained through calculation starting from the MSB to the LSB in the rate matching indicator field indicates a rate match pattern group of a 1^{st} PDSCH and a rate match pattern group of a 2^{nd} PDSCH (denoted as a PDSCH 1 and a PDSCH 2 in FIG. 14). A 2^{nd} bit (for example, a bit numbered 2 in FIG. 14) obtained through calculation starting from the MSB to the LSB in the rate matching indicator field indicates a rate match pattern group of a 3^{rd} PDSCH and a rate match pattern group of a 4^{th} PDSCH (denoted as a PDSCH 3 and a PDSCH 4 in FIG. 14). A 3^{rd} bit (for example, a bit numbered 3 in FIG. 14) obtained through calculation starting from the MSB to the LSB in the rate matching indicator field indicates a rate match pattern group of a 5^{th} PDSCH (denoted as a PDSCH 5 in FIG. 14). A 4^{th} bit (for example, a bit numbered 4 in FIG. 14) obtained through calculation starting from the MSB to the LSB in the rate matching indicator field indicates a rate match pattern group of a 6^{th} PDSCH (denoted as a PDSCH 6 in FIG. 14).

For still another example, refer to FIG. 15. N=3 and L=3 are used as an example. N₁ is a remainder of 3/4, that is, N₁=3, V₁=ceil(3/4)=1, and V₂=floor(3/4)=0. Correspondingly, a 1^{st} bit (for example, a bit numbered 1 in FIG. 15) obtained through calculation starting from the MSB to the LSB in the rate matching indicator field indicates a rate match pattern group of a 1^{st} PDSCH (denoted as a PDSCH 1 in FIG. 15). A 2^{nd} bit (for example, a bit numbered 2 in FIG. 15) obtained through calculation starting from the MSB to the LSB in the rate matching indicator field indicates a rate match pattern group of a 2^{nd} PDSCH (denoted as a PDSCH 2 in FIG. 15). A 3^{rd} bit (for example, a bit numbered 3 in FIG. 15) obtained through calculation starting from the MSB to the LSB in the rate matching indicator field indicates a rate match pattern group of a 3^{rd} PDSCH (denoted as a PDSCH 3 in FIG. 15).

In Case B of Manner 3, that the calculation starts from the LSB to the MSB in the G bits is used as an example, the g^{th} bit in the G bits is a g^{th} bit (not shown in FIG. 13 to FIG. 15) obtained through calculation starting from the LSB to the MSB in the G bits.

In some other embodiments, when g is any positive integer less than or equal to N₁, and when the first bit group includes a (g+G-N)^{th} bit in the G bits, the M physical shared channels corresponding to the first bit group are ((g-1)*V₁+1)^{th} to (g*V₁)^{th} physical shared channels in the L physical shared channels. In other words, for N₁ bits starting from a (G-N)^{th} bit in the G bits, each of the N₁ bits indicates rate match pattern groups for V₁ physical shared channels. In addition, different bits in the N₁ bits correspond to different physical shared channels.

When g is any positive integer greater than N₁ and less than or equal to N, and when the first bit group includes the (g+G-N)^{th} bit in the G bits, the M physical shared channels corresponding to the first bit group are (N₁*V₁+(g-N₁-1)*V₂+1)^{th} to (N₁*V₁+(g-N₁-1)*V₂+V₂)^{th} physical shared channels in the L physical shared channels. In other words, each bit after a (G-N+N₁)^{th} bit in the G bits indicates rate match pattern groups for V₂ physical shared channels.

In Case A of Manner 3, that the calculation starts from the MSB to the LSB in the G bits is used as an example, the (g+G-N)^{th} bit in the G bits is a (g+G-N)^{th} bit obtained through calculation starting from the MSB to the LSB in the G bits.

In Case B of Manner 3, that the calculation starts from the LSB to the MSB in the G bits is used as an example, the (g+G-N)^{th} bit in the G bits is a (g+G-N)^{th} bit obtained through calculation starting from the LSB to the MSB in the G bits.

In Case B of Manner 3, that the calculation starts from the LSB to the MSB in the G bits is used as an example:
Every 1 bit in G bits starts to sequentially indicate the rate match pattern groups of the maximum of M physical shared channels. N=4 and L=7 are used as an example. N₁ is a remainder of 7/4, that is, N₁=3, V₁=ceil(7/4)=2, and V₂=floor(7/4)=1. Correspondingly, a 1^{st} bit obtained through calculation starting from the LSB to the MSB in the rate matching indicator field indicates a rate match pattern group of a 1^{st} PDSCH and a rate match pattern group of a 2^{nd} PDSCH. A 2^{nd} bit obtained through calculation starting from the LSB to the MSB in the rate matching indicator field indicates a rate match pattern group of a 3^{rd} PDSCH and a rate match pattern group of a 4^{th} PDSCH. A 3^{rd} bit obtained through calculation starting from the LSB to the MSB in the rate matching indicator field indicates a rate match pattern group of a 5^{th} PDSCH and a rate match pattern group of a 6^{th} PDSCH. A 4^{th} bit obtained through calculation starting from the LSB to the MSB in the rate matching indicator field indicates a rate match pattern group of a 7^{th} PDSCH.

It is easily understood that, in Manner 3, when N₁=0, V₁=V₂=1. In other words, the one of the G bits indicates the rate match pattern group for the physical shared channel. For details, refer to the description in Manner 2. Details are not described herein again.

In other words, in Manner 3, each bit group (or described as each bit) in the first field indicates rate match pattern groups for a plurality of physical shared channels. This can flexibly indicate the rate match pattern groups for the different physical shared channels to some extent, and can reduce signaling overheads.

In Manner 3, each of the plurality of bit groups includes the one of the G bits. For an indication status of each bit group, refer to the descriptions in Case 1 to Case 4 in Manner 2. In Manner 3, the first bit group is still used as an example. A case indicated by the first bit group is applicable to each of the maximum M physical shared channels corresponding to the first bit group. For example, when the rate match pattern group indicated by the first bit group does not exist, a rate match pattern group of each of the M physical shared channels corresponding to the first bit group does not exist. When the rate match pattern group indicated by the first bit group is the first rate match pattern group, the rate match pattern group of each of the M physical shared channels corresponding to the first bit group is the first rate match pattern group. Other cases may be deduced by analogy. Details are not described again.

Manner 4: Each of the plurality of bit groups includes one of the G bits. Each bit group corresponds to the maximum of M physical shared channels in the L physical shared channels, where M>1, and M<L. It may be understood that each of the plurality of bit groups indicates the rate match pattern groups for the maximum of M physical shared channels. M is of a fixed value.

Optionally, in Manner 4, the parameter M is described as follows:
In some embodiments, a value of M is configured by the first device. For example, refer to FIG. 16. Before performing S802, the first device further performs S805.

S805: The first device sends second configuration information to the second device. Correspondingly, the second device receives the second configuration information from the first device.

The second configuration information is used to configure the value of M, and M is a positive integer less than or equal to X.

For example, when the first device is the network device, and the second device is the terminal device, the second configuration information may be configuration information, for example, rateMatchPatternSubgroup-r18 signaling, in PDSCH-config in the RRC signaling, and indicates the value of M. In other words, the value of M is semi-statically configured by the network device through the RRC signaling.

In other embodiments, M is preconfigured. For example, the value of M depends on X. For example, when X>2 and X<=4, M=2; when X>4 and X<=6, M=3; and when X>6, M=4. X indicates the maximum quantity of physical shared channels that can be scheduled by using the control information. For details, refer to the description in Manner 1. Details are not described herein again.

Optionally, in Manner 4, the parameter G is described as follows: A value of G is determined based on X and M, for example, G=ceil(X/M). In other words, after values of X and M are determined, the value of G may be obtained through ceil(X/M), to learn of a size of the first field (for example, the rate matching indicator field).

For example, when X=7 and M=2, G=ceil(X/M)=4, that is, the first field (for example, the rate matching indicator field) occupies 4 bits.

In the following, any one of the plurality of bit groups is denoted as a first bit group. The first bit group is used as an example for description.

When the first bit group includes the g^{th} bit in the G bits, or the first bit group includes a (g+G-ceil(L/M))^{th} bit in the G bits, the M physical shared channels corresponding to the first bit group are ((g-1)*M+1)^{th} to (g*M)^{th} physical shared channels in the L physical shared channels. g is a positive integer less than floor(L/M), ceil(·) indicates a round-up operator, floor(·) indicates a round-down operator, and / indicates a division operator.

In Case A of Manner 4, that the calculation starts from the MSB to the LSB in the G bits is used as an example, the g^{th} bit in the G bits is a g^{th} bit obtained through calculation starting from the MSB to the LSB in the G bits. The (g+G-ceil(L/M))^{th} bit in the G bits is a (g+G-ceil(L/M))^{th} bit obtained through calculation starting from the MSB to the LSB in the G bits.

X=7, M=2, and G=4 are used as an example. When four PDSCHs are actually scheduled by using the control information, a 1^{st} bit obtained through calculation starting from the MSB to the LSB in the rate matching indicator field indicates a rate match pattern group of a 1^{st} PDSCH and a rate match pattern group of a 2^{nd} PDSCH. A 2^{nd} bit obtained through calculation starting from the MSB to the LSB in the rate matching indicator field indicates a rate match pattern group of a 3^{rd} PDSCH and a rate match pattern group of a 4^{th} PDSCH.

When G*M>L, and when the first bit group includes the g^{th} bit in the G bits, or the first bit group includes a (g+G-ceil(L/M))^{th} bit in the G bits, the M physical shared channels corresponding to the first bit group are ((g-1)*M+1)^{th} to (g*M)^{th} physical shared channels in the L physical shared channels. When the first bit group includes a ceil(L/M)^{th} bit in the G bits, or the first bit group includes the G^{th} bit in the G bits, the M physical shared channels corresponding to the first bit group are ((ceil(L/M)-1)*M+1)^{th} to L^{th} physical shared channels in the L physical shared channels. ceil(·) indicates a round-up operator, and / indicates the division operator.

X=7, M=2, and G=4 are used as an example. When five (that is, L=5) PDSCHs are actually scheduled by using the control information, a 1^{st} bit obtained through calculation starting from the MSB to the LSB in the rate matching indicator field indicates a rate match pattern group of a 1^{st} PDSCH and a rate match pattern group of a 2^{nd} PDSCH. A 2^{nd} bit obtained through calculation starting from the MSB to the LSB in the rate matching indicator field indicates a rate match pattern group of a 3^{rd} PDSCH and a rate match pattern group of a 4^{th} PDSCH. A 3^{rd} bit in the rate matching indicator field indicates a rate match pattern group of a 5^{th} PDSCH.

X=7, M=2, and G=4 are still used as an example. When three (that is, L=3) PDSCHs are actually scheduled by using the control information, a 1^{st} bit obtained through calculation starting from the MSB to the LSB in the rate matching indicator field indicates a rate match pattern group of a 1^{st} PDSCH and a rate match pattern group of a 2^{nd} PDSCH. A 2^{nd} bit obtained through calculation starting from the MSB to the LSB in the rate matching indicator field indicates a rate match pattern group of a 3^{rd} PDSCH.

In other words, when G*M>L, for the plurality of bit groups included in the G bits, each bit group before a last bit group indicates the rate match pattern groups for the M physical shared channels. A quantity of physical shared channels corresponding to the last bit group is less than M.

In Case B of Manner 4, that the calculation starts from the LSB to the MSB in the G bits is used as an example, the g^{th} bit in the G bits is a g^{th} bit obtained through calculation starting from the LSB to the MSB in the G bits. The (g+G-ceil(L/M))^{th} bit in the G bits is a (g+G-ceil(L/M))^{th} bit obtained through calculation starting from the LSB to the MSB in the G bits.

For example, every 1 bit in G bits starts to sequentially indicate the rate match pattern groups of the maximum of M physical shared channels. X=7, M=2, and G=4 are used as an example. When five PDSCHs are actually scheduled by using the control information, a 1^{st} bit obtained through calculation starting from the LSB to the MSB in the rate matching indicator field indicates a rate match pattern group of a 1^{st} PDSCH and a rate match pattern group of a 2^{nd} PDSCH. A 2^{nd} bit obtained through calculation starting from the LSB to the MSB in the rate matching indicator field indicates a rate match pattern group of a 3^{rd} PDSCH and a rate match pattern group of a 4^{th} PDSCH. A 3^{rd} bit obtained through calculation starting from the LSB to the MSB in the rate matching indicator field indicates a rate match pattern group of a 5^{th} PDSCH.

In this way, in Manner 4, each bit group (or described as each bit) in the first field indicates rate match pattern groups for a plurality of physical shared channels. This can flexibly indicate the rate match pattern groups for the different physical shared channels to some extent, and can reduce signaling overheads.

In Manner 4, each of the plurality of bit groups includes the one of the G bits. For an indication status of each bit group, refer to the descriptions in Case 1 to Case 4 in Manner 2. In Manner 4, the first bit group is still used as an example. A case indicated by the first bit group is applicable to each of the maximum M physical shared channels corresponding to the first bit group. For example, when the rate match pattern group indicated by the first bit group does not exist, a rate match pattern group of each of the M physical shared channels corresponding to the first bit group does not exist. When the rate match pattern group indicated by the first bit group is the first rate match pattern group, the rate match pattern group of each of the M physical shared channels corresponding to the first bit group is the first rate match pattern group. Other cases may be deduced by analogy. Details are not described again.

It should be understood that, in Manner 2 to Manner 4, each of the plurality of bit groups includes the one of the G bits. In this case, the bit group in Manner 2 to Manner 4 may be replaced with a bit, and the first bit group in Manner 2 to Manner 4 may be replaced with a first bit.

For the first device, in downlink transmission or the sidelink transmission, after performing S802, the first device performs S803a. In uplink transmission, after performing S802, the first device performs S803b. S803a and S803b are described as follows:
S803a: The first device sends the L physical shared channels to the second device. Correspondingly, the second device receives the L physical shared channels from the first device based on the control information.

The i^{th} physical shared channel in the L physical shared channels occupies an i^{th} third resource, the i^{th} third resource is a remaining resource after the i^{th} second resource is excluded from the i^{th} first resource, and i is any positive integer less than or equal to L.

For example, when the i^{th} second resource exists and the i^{th} second resource overlaps the i^{th} first resource, the i^{th} third resource is a resource other than an overlapping resource in the i^{th} first resource. The overlapping resource is an overlapping resource between the i^{th} second resource and the i^{th} first resource. Refer to FIG. 10. i=2 is used as an example. A 2^{nd} second resource is a resource in an area filled with slashes in a 2^{nd} D slot (a slot corresponding to the PDSCH 2), and a 2^{nd} third resource is a resource in an area that is not filled with slashes in the 2^{nd} D slot (the slot corresponding to the PDSCH 2).

For example, when the i^{th} second resource does not exist, the i^{th} third resource is the i^{th} first resource. Refer to FIG. 10. i=1 is used as an example. A 1^{st} second resource does not exist, and a 1^{st} third resource is a resource in an area that is not filled with slashes in a 1^{st} D slot (a slot corresponding to the PDSCH 1). For example, 14 symbols are occupied in time domain, and 275 RBs are occupied in frequency domain.

It is easily understood that when the i^{th} second resource exists and the i^{th} second resource does not overlap the i^{th} first resource, the i^{th} third resource is the i^{th} first resource, which is not shown in FIG. 10.

S803b: The second device sends the L physical shared channels to the first device based on the control information. Correspondingly, the first device receives the L physical shared channels from the second device.

For a third resource occupied by each of the L physical shared channels, refer to the description in S803a. Details are not described herein again.

In some embodiments, refer to FIG. 16. Before performing S802, the first device further performs the following step:
S806: The first device sends fourth configuration information to the second device. Correspondingly, the second device receives the fourth configuration information from the first device.

The fourth configuration information is used to configure a value of X, X indicates the maximum quantity of physical shared channels that can be scheduled by using the control information, and X is a positive integer greater than or equal to L.

For example, the fourth configuration information may be carried in the RRC signaling, so that the second device learns of the value of X.

It should be understood that the PDSCH is mainly used as an example for example description in embodiments of this application. This should not be understood as a limitation on embodiments of this application. When the physical shared channel is the PDSCH and the control information is the DCI, a DCI format may be DCI1_1. When the physical shared channel is the PSSCH and the control information is the DCI, the DCI format may be DCI0_1. For details, refer to a related technology. Details are not described herein again.

The foregoing mainly describes the solutions provided in embodiments of this application from a perspective of interaction between network elements. Correspondingly, an embodiment of this application further provides a communication apparatus. The communication apparatus may be the network element in the foregoing method embodiments, an apparatus including the foregoing network element, or a component that can be used in a network element. It may be understood that, to implement the foregoing functions, the communication apparatus includes hardware structures and/or software modules for performing corresponding functions. A person skilled in the art should be easily aware that, in combination with units and algorithm steps of the examples described in embodiments disclosed in this specification, this application can be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

For example, FIG. 17 is a diagram of a structure of a communication apparatus according to an embodiment of this application. The communication apparatus may be a first device, or may be a chip (system) or another component or assembly that may be disposed in the first device. Alternatively, the communication apparatus may be a second device, or may be a chip (system) or another component or assembly that may be disposed in the second device.

As shown in FIG. 17, the communication apparatus 1700 may include a processor 1701. Optionally, the communication apparatus 1700 may further include a memory 1702 and/or a transceiver 1703. The processor 1701 is coupled to the memory 1702 and the transceiver 1703, for example, may be connected through a communication bus.

The following specifically describes each component of the communication apparatus 1700 with reference to FIG. 17.

The processor 1701 is a control center of the communication apparatus 1700, and may be one processor, or may be a collective name of a plurality of processing elements. For example, the processor 1701 is one or more central processing units (central processing unit, CPU), and may be an application-specific integrated circuit (application-specific integrated circuit, ASIC) or one or more integrated circuits configured to implement embodiments of this application, for example, one or more digital signal processors (digital signal processor, DSP) or one or more field programmable gate arrays (field programmable gate array, FPGA).

Optionally, the processor 1701 may perform various functions of the communication apparatus 1700 by running or executing a software program stored in the memory 1702 and invoking data stored in the memory 1702.

During specific implementation, in an embodiment, the processor 1701 may include one or more CPUs, such as a CPU 0 and a CPU 1 shown in FIG. 17.

During specific implementation, in an embodiment, the communication apparatus 1700 may alternatively include a plurality of processors such as the processor 1701 and a processor 1704 shown in FIG. 17. Each of the processors may be a single-core processor (single-CPU) or a multi-core processor (multi-CPU). The processor herein may be one or more devices, circuits, and/or processing cores configured to process data (for example, computer program instructions).

The memory 1702 is configured to store a software program for executing the solutions of this application, and the processor 1701 controls the execution. For a specific implementation, refer to the foregoing method embodiments. Details are not described herein again.

Optionally, the memory 1702 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be used to carry or store expected program code in a form of instruction or data structure and that can be accessed by a computer. However, this is not limited thereto. The memory 1702 may be integrated with the processor 1701; or may exist independently, and is coupled to the processor 1701 through an interface circuit (not shown in FIG. 17) of the communication apparatus 1700. This is not specifically limited in embodiments of this application.

The transceiver 1703 is configured to communicate with another communication apparatus. For example, the communication apparatus 1700 is the first device, and the transceiver 1703 may be configured to communicate with the second device. For another example, the communication apparatus 1700 is the second device, and the transceiver 1703 may be configured to communicate with the first device.

Optionally, the transceiver 1703 may include a receiver and a transmitter (not separately shown in FIG. 17). The receiver is configured to implement a receiving function, and the transmitter is configured to implement a sending function.

Optionally, the transceiver 1703 may be integrated with the processor 1701; or may exist independently, and is coupled to the processor 1701 through the interface circuit (not shown in FIG. 17) of the communication apparatus 1700. This is not specifically limited in embodiments of this application.

It is easily understood that the structure of the communication apparatus 1700 shown in FIG. 17 does not constitute a limitation on the communication apparatus. An actual communication apparatus may include more or fewer components than those shown in the figure, combine some components, or have different component arrangement.

In addition, for technical effect of the communication apparatus 1700, refer to the technical effect of the method in the foregoing method embodiments. Details are not described herein again.

It should be understood that in embodiments of this application, the processor may be a central processing unit (central processing unit, CPU). The processor may alternatively be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It may be understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external cache. By way of example rather than a limitative description, random access memories (random access memory, RAM) in a plurality of forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

Optionally, an embodiment of this application further provides a computer program product carrying computer instructions. When the computer instructions are run on a computer, the computer is enabled to perform the method described in the foregoing embodiments.

Optionally, an embodiment of this application further provides a computer-readable storage medium. The computer-readable storage medium stores computer instructions. When the computer instructions are run on a computer, the computer is enabled to perform the method described in the foregoing embodiments.

Optionally, an embodiment of this application further provides a chip, including a processing circuit and a transceiver circuit. The processing circuit and the transceiver circuit are configured to implement the method described in the foregoing embodiments. The processing circuit is configured to perform a processing action in a corresponding method, and the transceiver circuit is configured to perform a receiving/sending action in the corresponding method.

All or some of the foregoing embodiments may be implemented using software, hardware (for example, circuit), firmware, or any combination thereof. When software is used for implementation, all or some of the foregoing embodiments may be implemented in a form of a computer program product. The computer program product includes one or more computer instructions or computer programs. When the computer instructions or the computer programs are loaded and executed on the computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid state disk.

It should be understood that the term "and/or" in this specification describes only an association relationship between associated objects, and indicates that three relationships may exist. For example, A and/or B may indicate the following three cases: Only A exists, both A and B exist, and only B exists, where A and B may be singular or plural. In addition, the character "/" in this specification usually indicates an "or" relationship between associated objects, or may indicate an "and/or" relationship. A specific meaning depends on the context.

In this application, "at least one" means one or more, and "a plurality of" means two or more. "At least one of the following items (pieces)" or a similar expression thereof refers to any combination of these items, including a single item (piece) or any combination of a plurality of items (pieces). For example, at least one item (piece) of a, b, or c may indicate a, b, c, a and b, a and c, b and c, or a, b, and c, where a, b, and c may be singular or plural.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed systems, apparatuses, and methods may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on an actual requirement to achieve the objectives of the solutions of embodiments.

In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium and includes several instructions for instructing a computer device (which may be a personal computer, a server, or a communication device) to perform all or some of the steps of the methods described in embodiments of this application. The foregoing storage medium includes any medium, for example, a USB flash drive, a removable hard disk, a read-only memory (read-only memory, ROM), a random access memory (random access memory, RAM), a magnetic disk, an optical disc, or the like that can store program code.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
sending, by a first device, control information and L physical shared channels to a second device, wherein
the control information indicates the L physical shared channels and L first resources, and an i^{th} first resource in the L first resources is a time-frequency resource allocated to an i^{th} physical shared channel in the L physical shared channels;
the control information comprises a first field, the first field comprises G bits, the G bits indicate L rate match pattern groups, the G bits comprise a plurality of bit groups, each of the plurality of bit groups indicates rate match pattern groups for a maximum of M physical shared channels, the M physical shared channels are a part of the L physical shared channels, the rate match pattern groups indicated by each of the plurality of bit groups are a part of the L rate match pattern groups, M is a positive integer less than L, G is a positive integer greater than or equal to 2, an i^{th} rate match pattern group in the L rate match pattern groups indicates an i^{th} second resource, and the i^{th} second resource is a time-frequency resource that is indicated by the control information and that cannot be occupied by the i^{th} physical shared channel;
the i^{th} physical shared channel in the L physical shared channels occupies an i^{th} third resource; and
when the i^{th} second resource exists and the i^{th} second resource overlaps the i^{th} first resource, the i^{th} third resource is a resource other than an overlapping resource in the i^{th} first resource, and the overlapping resource is an overlapping resource between the i^{th} second resource and the i^{th} first resource; or
when the i^{th} second resource does not exist, the i^{th} third resource is the i^{th} first resource, wherein
L is a positive integer greater than 1, and i is any positive integer less than or equal to L.

2. The method according to claim 1, wherein before the sending, by a first device, control information to a second device, the method further comprises:
sending, by the first device, first configuration information to the second device, wherein the first configuration information is used to configure P rate match pattern groups, any one of the L rate match pattern groups is at most one of the P rate match pattern groups, and P is a positive integer greater than 1.

3. The method according to claim 2, wherein
a first bit group is one of the plurality of bit groups, and the first bit group comprises one of the G bits; and
when the first bit group is of a first value, a rate match pattern group indicated by the first bit group does not exist, or when the first bit group is of a second value, the rate match pattern group indicated by the first bit group is one of the P rate match pattern groups.

4. The method according to claim 2, wherein
a first bit group is one of the plurality of bit groups, and the first bit group comprises one of the G bits;
when the first bit group is of a first value, a rate match pattern group indicated by the first bit group is a first rate match pattern group, or when the first bit group is of a second value, the rate match pattern group indicated by the first bit group is a second rate match pattern group; and
the first rate match pattern group is one of the P rate match pattern groups, and the second rate match pattern group is another one of the P rate match pattern groups.

5. The method according to any one of claims 2 to 4, wherein G=ceil(X/M), ceil(·) indicates a round-up operator, and X indicates a maximum quantity of physical shared channels that are able to be scheduled by using the control information.

6. The method according to claim 5, wherein before the sending, by a first device, control information to a second device, the method further comprises:
sending, by the first device, second configuration information to the second device, wherein the second configuration information is used to configure a value of M, and M is a positive integer less than or equal to X.

7. The method according to claim 5 or 6, wherein
the first bit group is the one of the plurality of bit groups, and the first bit group comprises a g^{th} bit in the G bits, or the first bit group comprises a (g+G-ceil(L/M))^{th} bit in the G bits; and the M physical shared channels are ((g-1)*M+1)^{th} to (g*M)^{th} physical shared channels in the L physical shared channels, wherein
a 1^{st} bit in the G bits is a most significant bit MSB, and the G^{th} bit in the G bits is a least significant bit LSB, or the 1^{st} bit in the G bits is the LSB, and the G^{th} bit in the G bits is the MSB; and g is a positive integer less than floor(L/M), floor(·) indicates a round-down operator, ceil(·) indicates the round-up operator, and / indicates a division operator.

8. The method according to claim 5 or 6, wherein
the first bit group is the one of the plurality of bit groups, and when G*M>L, the first bit group comprises a ceil(L/M)^{th} bit in the G bits, or the first bit group comprises a G^{th} bit in the G bits; and the M physical shared channels are ((ceil(L/M)-1)*M+1)^{th} to L^{th} physical shared channels in the L physical shared channels, wherein
a 1^{st} bit in the G bits is a most significant bit MSB, and the G^{th} bit in the G bits is a least significant bit LSB, or the 1^{st} bit in the G bits is the LSB, and the G^{th} bit in the G bits is the MSB; and ceil(·) indicates the round-up operator, and / indicates a division operator.

9. The method according to any one of claims 2 to 4, wherein
the first bit group is the one of the plurality of bit groups, and the first bit group comprises a g^{th} bit in the G bits, or the first bit group comprises a (g+G-L)^{th} bit in the G bits; and the M physical shared channels are a g^{th} physical shared channel in the L physical shared channels, wherein
a 1^{st} bit in the G bits is a most significant bit MSB, and the G^{th} bit in the G bits is a least significant bit LSB, or the 1^{st} bit in the G bits is the LSB, and the G^{th} bit in the G bits is the MSB; and g is any positive integer less than or equal to L, and M=1.

10. The method according to any one of claims 2 to 4, wherein
the first bit group is the one of the plurality of bit groups, and the first bit group comprises a g^{th} bit in the G bits, or the first bit group comprises a (g+G-N)^{th} bit in the G bits; and the M physical shared channels are ((g-1)*V₁+1)^{th} to (g*V₁)^{th} physical shared channels in the L physical shared channels, wherein
a 1^{st} bit in the G bits is a most significant bit MSB, and the G^{th} bit in the G bits is a least significant bit LSB, or the 1^{st} bit in the G bits is the LSB, and the G^{th} bit in the G bits is the MSB; and g is any positive integer less than or equal to N₁, N₁ is a remainder of L/N, N₁ is a positive integer, N=min(G, L), V₁=ceil(L/N), / indicates a division operator, min(·) indicates a minimum operator, and ceil(·) indicates a round-up operator.

11. The method according to any one of claims 2 to 4, wherein
the first bit group is the one of the plurality of bit groups, and the first bit group comprises a g^{th} bit in the G bits, or the first bit group comprises a (g+G-N)^{th} bit in the G bits; and the M physical shared channels are (N₁*V₁+(g-N₁-1)*V₂+1)^{th} to (N₁*V₁+(g-N₁-1)*V₂+V₂)^{th} physical shared channels in the L physical shared channels, wherein
a 1^{st} bit in the G bits is a most significant bit MSB, and the G^{th} bit in the G bits is a least significant bit LSB, or the 1^{st} bit in the G bits is the LSB, and the G^{th} bit in the G bits is the MSB; and g is any positive integer greater than N₁ and less than or equal to N, N₁ is a remainder of L/N, N₁ is a positive integer, N=min(G, L), V₁=ceil(L/N), V₂=floor(L/N), / indicates a division operator, min(·) indicates a minimum operator, ceil(·) indicates a round-up operator, and floor(·) indicates a round-down operator.

12. The method according to any one of claims 9 to 11, wherein G=X, and X indicates a maximum quantity of physical shared channels that are able to be scheduled by using the control information.

13. The method according to any one of claims 9 to 11, wherein before the sending, by a first device, control information to a second device, the method further comprises:
sending, by the first device, third configuration information to the second device, wherein the third configuration information is used to configure a value of G.

14. The method according to claim 2, wherein
a first bit group is one of the plurality of bit groups, the first bit group comprises at least two adjacent bits in the G bits, and M=1.

15. The method according to claim 14, wherein
the first bit group comprises a (2*g-1)^{th} bit and a (2*g)^{th} bit in the G bits, or the first bit group comprises a (2*(X-L+g)-1)^{th} bit and a (2*(X-L+g))^{th} bit in the G bits; and the M physical shared channels are a g^{th} physical shared channel in the L physical shared channels, wherein
a 1^{st} bit in the G bits is a most significant bit MSB, and a G^{th} bit in the G bits is a least significant bit LSB, or the 1^{st} bit in the G bits is the LSB, and the G^{th} bit in the G bits is the MSB; and G is a positive integer greater than or equal to 2L, g is any positive integer less than or equal to L, and X indicates a maximum quantity of physical shared channels that are able to be scheduled by using the control information.

16. The method according to claim 15, wherein G=2X.

17. The method according to any one of claims 14 to 16, wherein
the first bit group comprises the (2*g-1)^{th} bit and the (2*g)^{th} bit in the G bits; and
when the (2*g-1)^{th} bit in the G bits is of a first value, and the (2*g)^{th} bit is of the first value, a rate match pattern group indicated by the first bit group does not exist; or
when the (2*g-1)^{th} bit in the G bits is of a second value, and the (2*g)^{th} bit is of the first value, the rate match pattern group indicated by the first bit group is a first rate match pattern group; or
when the (2*g-1)^{th} bit in the G bits is of the first value, and the (2*g)^{th} bit is of the second value, the rate match pattern group indicated by the first bit group is a second rate match pattern group; or
when the (2*g-1)^{th} bit in the G bits is of the second value, and the (2*g)^{th} bit is of the second value, rate match pattern groups indicated by the first bit group are the first rate match pattern group and the second rate match pattern group, wherein
the 1^{st} bit in the G bits is the most significant bit MSB, and the G^{th} bit in the G bits is the least significant bit LSB, or the 1^{st} bit in the G bits is the LSB, and the G^{th} bit in the G bits is the MSB; and g is the positive integer less than or equal to L, the first rate match pattern group is one of the P rate match pattern groups, and the second rate match pattern group is another one of the P rate match pattern groups.

18. The method according to any one of claims 2 to 17, wherein P is 2.

19. The method according to any one of claims 1 to 18, wherein before the sending, by a first device, control information to a second device, the method further comprises:
sending, by the first device, fourth configuration information to the second device, wherein the fourth configuration information is used to configure a value of X, X indicates a maximum quantity of physical shared channels that are able to be scheduled by using the control information, and X is a positive integer greater than or equal to L.

20. The method according to any one of claims 1 to 19, wherein
when the first device is a network device, and the second device is a terminal device, the control information is downlink control information DCI, the L physical shared channels are L physical downlink shared channels PDSCH, and the first field is a rate matching indicator field; or
when the first device is a first terminal device, and the second device is a second terminal device, the control information is sidelink control information SCI, and the L physical shared channels are L physical sidelink shared channels PSSCH.

21. A communication method, comprising:
receiving, by a second device, control information from a first device, wherein
the control information indicates L physical shared channels and L first resources, and an i^{th} first resource in the L first resources is a time-frequency resource allocated to an i^{th} physical shared channel in the L physical shared channels; and
the control information comprises a first field, the first field comprises G bits, the G bits indicate L rate match pattern groups, the G bits comprise a plurality of bit groups, each of the plurality of bit groups indicates rate match pattern groups for a maximum of M physical shared channels, the M physical shared channels are a part of the L physical shared channels, the rate match pattern groups indicated by each of the plurality of bit groups are a part of the L rate match pattern groups, M is a positive integer less than L, G is a positive integer greater than or equal to 2, an i^{th} rate match pattern group in the L rate match pattern groups indicates an i^{th} second resource, and the i^{th} second resource is a time-frequency resource that is indicated by the control information and that cannot be occupied by the i^{th} physical shared channel; and
receiving, by the second device, the L physical shared channels from the first device based on the control information, wherein
the i^{th} physical shared channel in the L physical shared channels occupies an i^{th} third resource; and
when the i^{th} second resource exists and the i^{th} second resource overlaps the i^{th} first resource, the i^{th} third resource is a resource other than an overlapping resource in the i^{th} first resource, and the overlapping resource is an overlapping resource between the i^{th} second resource and the i^{th} first resource; or
when the i^{th} second resource does not exist, the i^{th} third resource is the i^{th} first resource, wherein
L is a positive integer greater than 1, and i is any positive integer less than or equal to L.

22. The method according to claim 21, wherein before the receiving, by a second device, control information from a first device, the method further comprises:
receiving, by the second device, first configuration information from the first device, wherein the first configuration information is used to configure P rate match pattern groups, any one of the L rate match pattern groups is at most one of the P rate match pattern groups, and P is a positive integer greater than 1.

23. The method according to claim 22, wherein
a first bit group is one of the plurality of bit groups, and the first bit group comprises one of the G bits; and
when the first bit group is of a first value, a rate match pattern group indicated by the first bit group does not exist, or when the first bit group is of a second value, the rate match pattern group indicated by the first bit group is one of the P rate match pattern groups.

24. The method according to claim 22, wherein
a first bit group is one of the plurality of bit groups, and the first bit group comprises one of the G bits;
when the first bit group is of a first value, a rate match pattern group indicated by the first bit group is a first rate match pattern group, or when the first bit group is of a second value, the rate match pattern group indicated by the first bit group is a second rate match pattern group; and
the first rate match pattern group is one of the P rate match pattern groups, and the second rate match pattern group is another one of the P rate match pattern groups.

25. The method according to any one of claims 22 to 24, wherein G=ceil(X/M), ceil(·) indicates a round-up operator, and X indicates a maximum quantity of physical shared channels that are able to be scheduled by using the control information.

26. The method according to claim 25, wherein before the receiving, by a second device, control information from a first device, the method further comprises:
receiving, by the second device, second configuration information from the first device, wherein the second configuration information is used to configure a value of M, and M is a positive integer less than or equal to X.

27. The method according to claim 25 or 26, wherein
the first bit group is the one of the plurality of bit groups, and the first bit group comprises a g^{th} bit in the G bits, or the first bit group comprises a (g+G-ceil(L/M))^{th} bit in the G bits; and the M physical shared channels are ((g-1)*M+1)^{th} to (g*M)^{th} physical shared channels in the L physical shared channels, wherein
a 1^{st} bit in the G bits is a most significant bit MSB, and the G^{th} bit in the G bits is a least significant bit LSB, or the 1^{st} bit in the G bits is the LSB, and the G^{th} bit in the G bits is the MSB; and g is a positive integer less than floor(L/M), floor(·) indicates a round-down operator, ceil(·) indicates the round-up operator, and / indicates a division operator.

28. The method according to claim 25 or 26, wherein
the first bit group is the one of the plurality of bit groups, and when G*M>L, the first bit group comprises a ceil(L/M)^{th} bit in the G bits, or the first bit group comprises a G^{th} bit in the G bits; and the M physical shared channels are ((ceil(L/M)-1)*M+1)^{th} to L^{th} physical shared channels in the L physical shared channels, wherein
a 1^{st} bit in the G bits is a most significant bit MSB, and the G^{th} bit in the G bits is a least significant bit LSB, or the 1^{st} bit in the G bits is the LSB, and the G^{th} bit in the G bits is the MSB; and ceil(·) indicates the round-up operator, and / indicates a division operator.

29. The method according to any one of claims 22 to 24, wherein
the first bit group is the one of the plurality of bit groups, and the first bit group comprises a g^{th} bit in the G bits, or the first bit group comprises a (g+G-L)^{th} bit in the G bits; and the M physical shared channels are a g^{th} physical shared channel in the L physical shared channels, wherein
a 1^{st} bit in the G bits is a most significant bit MSB, and the G^{th} bit in the G bits is a least significant bit LSB, or the 1^{st} bit in the G bits is the LSB, and the G^{th} bit in the G bits is the MSB; and g is any positive integer less than or equal to L, and M=1.

30. The method according to any one of claims 22 to 24, wherein
the first bit group is the one of the plurality of bit groups, and the first bit group comprises a g^{th} bit in the G bits, or the first bit group comprises a (g+G-N)^{th} bit in the G bits; and the M physical shared channels are ((g-1)*V₁+1)^{th} to (g*V₁)^{th} physical shared channels in the L physical shared channels, wherein
a 1^{st} bit in the G bits is a most significant bit MSB, and the G^{th} bit in the G bits is a least significant bit LSB, or the 1^{st} bit in the G bits is the LSB, and the G^{th} bit in the G bits is the MSB; and g is any positive integer less than or equal to N₁, N₁ is a remainder of L/N, N₁ is a positive integer, N=min(G, L), V₁=ceil(L/N), / indicates a division operator, min(·) indicates a minimum operator, and ceil(·) indicates a round-up operator.

31. The method according to any one of claims 22 to 24, wherein
the first bit group is the one of the plurality of bit groups, and the first bit group comprises a g^{th} bit in the G bits, or the first bit group comprises a (g+G-N)^{th} bit in the G bits; and the M physical shared channels are (N₁*V₁+(g-N₁-1)*V₂+1)^{th} to (N₁*V₁+(g-N₁-1)*V₂+V₂)^{th} physical shared channels in the L physical shared channels, wherein
a 1^{st} bit in the G bits is a most significant bit MSB, and the G^{th} bit in the G bits is a least significant bit LSB, or the 1^{st} bit in the G bits is the LSB, and the G^{th} bit in the G bits is the MSB; and g is any positive integer greater than N₁ and less than or equal to N, N₁ is a remainder of L/N, N₁ is a positive integer, N=min(G, L), V₁=ceil(L/N), V₂=floor(L/N), / indicates a division operator, min(·) indicates a minimum operator, ceil(·) indicates a round-up operator, and floor(·) indicates a round-down operator.

32. The method according to any one of claims 29 to 31, wherein G=X, and X indicates a maximum quantity of physical shared channels that are able to be scheduled by using the control information.

33. The method according to any one of claims 29 to 31, wherein before the receiving, by a second device, control information from a first device, the method further comprises:
receiving, by the second device, third configuration information from the first device, wherein the third configuration information is used to configure a value of G.

34. The method according to claim 22, wherein
a first bit group is one of the plurality of bit groups, the first bit group comprises at least two adjacent bits in the G bits, and M=1.

35. The method according to claim 34, wherein
the first bit group comprises a (2*g-1)^{th} bit and a (2*g)^{th} bit in the G bits, or the first bit group comprises a (2*(X-L+g)-1)^{th} bit and a (2*(X-L+g))^{th} bit in the G bits; and the M physical shared channels are a g^{th} physical shared channel in the L physical shared channels, wherein
a 1^{st} bit in the G bits is a most significant bit MSB, and a G^{th} bit in the G bits is a least significant bit LSB, or the 1^{st} bit in the G bits is the LSB, and the G^{th} bit in the G bits is the MSB; and G is a positive integer greater than or equal to 2L, g is any positive integer less than or equal to L, and X indicates a maximum quantity of physical shared channels that are able to be scheduled by using the control information.

36. The method according to claim 35, wherein G=2X.

37. The method according to any one of claims 34 to 36, wherein
the first bit group comprises the (2*g-1)^{th} bit and the (2*g)^{th} bit in the G bits; and
when the (2*g-1)^{th} bit in the G bits is of a first value, and the (2*g)^{th} bit is of the first value, a rate match pattern group indicated by the first bit group does not exist; or
when the (2*g-1)^{th} bit in the G bits is of a second value, and the (2*g)^{th} bit is of the first value, the rate match pattern group indicated by the first bit group is a first rate match pattern group; or
when the (2*g-1)^{th} bit in the G bits is of the first value, and the (2*g)^{th} bit is of the second value, the rate match pattern group indicated by the first bit group is a second rate match pattern group; or
when the (2*g-1)^{th} bit in the G bits is of the second value, and the (2*g)^{th} bit is of the second value, rate match pattern groups indicated by the first bit group are the first rate match pattern group and the second rate match pattern group, wherein
the 1^{st} bit in the G bits is the most significant bit MSB, and the G^{th} bit in the G bits is the least significant bit LSB, or the 1^{st} bit in the G bits is the LSB, and the G^{th} bit in the G bits is the MSB; and g is the positive integer less than or equal to L, the first rate match pattern group is one of the P rate match pattern groups, and the second rate match pattern group is another one of the P rate match pattern groups.

38. The method according to any one of claims 22 to 37, wherein P is 2.

39. The method according to any one of claims 21 to 38, wherein before the receiving, by a second device, control information from a first device, the method further comprises:
receiving, by the second device, fourth configuration information from the first device, wherein the fourth configuration information is used to configure a value of X, X indicates a maximum quantity of physical shared channels that are able to be scheduled by using the control information, and X is a positive integer greater than or equal to L.

40. The method according to any one of claims 21 to 39, wherein
when the second device is a network device, and the first device is a terminal device, the control information is downlink control information DCI, the L physical shared channels are L physical downlink shared channels PDSCH, and the first field is a rate matching indicator field; or
when the second device is a first terminal device and the first device is a second terminal device, the control information is sidelink control information SCI, and the L physical shared channels are L physical sidelink shared channels PSSCH.

41. A first device, comprising a processor and a memory, wherein the processor is coupled to the memory, the memory stores program instructions, and when the program instructions stored in the memory are executed by the processor, the method according to any one of claims 1 to 20 is implemented.

42. A second device, comprising a processor and a memory, wherein the processor is coupled to the memory, the memory stores program instructions, and when the program instructions stored in the memory are executed by the processor, the method according to any one of claims 21 to 40 is implemented.

43. A chip, comprising a processor and an input/output interface, wherein the input/output interface is configured to: receive a signal from another apparatus other than the chip and transmit the signal to the processor, or send a signal from the processor to the another apparatus other than the chip, wherein the processor is configured to implement the method according to any one of claims 1 to 40 by using a logic circuit or executing code instructions.

44. A computer-readable storage medium, wherein the storage medium stores a computer program or instructions, and when the computer program or the instructions are executed, the method according to any one of claims 1 to 40 is implemented.

45. A communication system, comprising a first device and a second device, wherein
the first device is configured to perform the method according to any one of claims 1 to 20; and
the second device is configured to perform the method according to any one of claims 21 to 40.
